# EUROPÄISCHE PATENTSCHRIFT

(11) **EP 0 284 019 B1**
(45) Veröffentlichungstag und Bekanntmachung des Hinweises auf die Patenterteilung: **17.08.1994**
(21) Anmeldenummer: 88104559.5
(22) Anmeldetag: 22.03.1988
(51) Int. Cl.: H04L 27/00

(54) **Verfahren zur Erzeugung von Frequenz-und/oder Phasenänderungen bei Wechselströmen, beispielsweise zur Verwendung bei der Quadraturamplitudenmodulation (QAM) und für Probeentnahmen**
Method for producing frequency and/or phase shifts in alternating currents, used in particular for quadrature amplitude modulation (QAM) and for taking samples
Procédé de génération de variations de la fréquence et/ou de la phase de courants alternatifs, utilisé notamment pour la modulation d'amplitude en quadrature (QAM) et pour la prise d'échantillons

(30) Priorität: 23.03.1987 DE 3709451; 12.06.1987 DE 3719670; 26.08.1987 DE 3728492; 19.02.1988 DE 3805263
(43) Veröffentlichungstag der Anmeldung: 28.09.1988
(73) Patentinhaber: Dirr, Josef, D-81679 München (DE)
(72) Erfinder: Dirr, Josef, D-81679 München (DE)

(56) Entgegenhaltungen:
- EP-A- 0 197 529
- US-A- 4 066 841

## Beschreibung

Die vorliegende Erfindung befasst sich mit einem Verfahren zur Erezeugung von Frequenz- und/oder Phasenänderungen bei Wechselströmen, beispielsweise zur Verwendung bei der Quadraturamplitudenmodulation (QAM) und für Probeentnahmen.

Es gibt bereits schon Verfahren, bei denen die Phasenänderung eines Wechselstromes für die Codierung von Daten bezw. Zeichen vorgesehen wird. so sind z.B. bekannt die 4-stufige Phasentastung (PSK-Phase Shift Keying) und die 16 PSK. Teilweise sind diese Verfahren mit einer Amplitudencodierung kombiniert. Ein Nachteil derselben ist, dass ein sehr breites Frequenzband für die Übertragung erforderlich ist. Solche mehrwertige Verfahren lassen sich auch aus wirtschaftlichen Gründen nur bis zur 16PSK anwenden. Weiterhin ist ein Verfahren bekannt, bei dem der jeweilige Phasensprung, mit dem ein analoges (z.B. PAM-Probe) oder digitales Signal codiert wird, in zwei oder eine Vielzahl von Phasensprüngen unterteilt wird (Europäische Patentanmeldung 0197 529). Die Phasensprünge sind hierbei immer nur so gross, dass immer nur positive und negative Halbwellen entstehen. Die Auswertung der Phasenänderung erfolgt dabei durch Abmessung der Periodendauern der zu einem Phasensprung gehörenden Phasensprungstufen. Die bisher verwendeten Bauteile für die die Herstellung der Phasenschieber sind toleranz-alterungs-und wärmeabhängig, sodass die Genauigkeit doch zu wünschen übrig lässt.

Aufgabe der vorliegenden Erfindung ist es nun ein Verfahren aufzuzeigen , bei dem der Vorteil einer Einsparung an Bandbreite trotz einer einfachen Erzeugung einer Phasen und/oder Frequenzänerung erhalten bleibt. Dabei soll dieses Verfahren sowohl bei Phasen- als auch Frequenzänderungen verwendet werden können. Ausserdem soll auch auf der Sende- und Empfangsseite eine leichte , einfache Umschaltung bezw. Auswertung von Phasenänderungen möglich sein. Diese Aufgabe wird gemäss der Erfindung durch die im Patentanspruch 1 offenbarte Lehre erreicht.

Ein besonderer Vorteil ist, dass beinahe stufenlos, ohne grossen zusätzlichen Aufwand eine Phasen- bezw. Frequenzänderung vorgenommen werden kann, ohne dass dabei eine unerwünschte Amplitudenänderung entsteht- Bei der Bandbegrenzung von Rechteckimpulsen ändert sich die Periodendauer nicht, sodass auch eine einfache Auswertung durch Abmessung der Periodendauern möglich ist. Die Erfindung lässt sich besonders vorteilhaft einsetzen wenn die Codierung durch die Amplituden der Halbwellen bezw. Perioden eines Wechselstromes erfolgt, die in einer ununterbrochenen Folge von positiven und negativen Halbwellen gesendet werden. Dann ist es möglich jeweils 2 Codierwechselströme zusammenzufassen, wenn sie gegeneinander um 90 Grad phasenverschoben werden. Bei digitaler Amplitudencodierung kann man dabei auch 4 Codierwechselströme zu einem zusammenfassen.Auch ist es möglich die Frequenz zu verkleinern, indem die Probeentnahmewerte in 2 oder mehrere Wechselströme kleinerer Frequenz umcodiert werden, wobei bei Verwendung von 2 Umcodierungswechselströmen die halbe Frequenz für jeden und eine gegenseitige Phasenverschiebung von 180 Grad und bei mehreren Umcodierungswechselströmen eine solche Frequenz und Phasenverschiebung vorgesehen wird, die sich durch Division der Frequenz des Codierwechselstromes durch die Zahl der Umcodierungswechselströme bezw. durch Division von 360 Grad durch die Zahl der Umcodierungswechselströme ergibt. Diese Umcodierungswechselströme können dann wieder , wenn sie gegeneinander um 90 Grad phasenverschoben sind , addiert werden. Auch ist es möglich über Draht und Funk die QAM im Duplexverkehr zu verwenden, indem der eine Codierwechselstrom in der einen Richtung und der andere Codierwechselstrom in der Gegenrichtung gesendet wird. Dasselbe gilt auch für doppelte Additionswechselströme. Vorteilhaft kann die Erfindung über Verbindungs- über Anschlussleitungen und über Funk eingesetzt werden. Ein ISDN-Betrieb ist dabei einfach und man kann ein mehrfaches als bisher über eine 64 Kbit-Leitung übertragen. Bei Wählsternschalter, Zweieranschlüssen beim Fernsehen , also insbesondere in der gesamten Fernmeldetechnik kann sie mit Vorteil eingesetzt werden. Eine mehrfache Amplitudencodierung war bei der klassischen QAM nur bei 45 Grad möglich.

Die Erfindung wird nun an Hand der Zeichnungen näher erläutert, diese stellen dar:
- Fig.1: ein Vektordiagramm einer stufenweisen Phasenänderung ohne Amplitudenänderung
- Fig.2: eine bisherige 4-wertige Phasenmodulation
- Fig.3: die Wirkung einer Bandbegrenzung auf ein nichtsinusförmiges Signal
- Fig.4-6: verschieden grosse Phasensprünge gemäss der Erfindung und stufenweise Phasensprünge
- Fig.7: Erzeugung von Phasen- und Frequenzänderungen
- Fig.8,9,10: Auswertung von Phasenänderungen
- Fig.11: Auswertung von stufenweisen Phasensprüngen
- Fig.12: Erzeugung von phasenverschobenen Wechselströmen
- Fig.13: Festlegung der Phase der Vektorwechselströme bei der QAM mit Hilfe der Halbperiodendauer des Summenwechselstromes.
- Fig.14: Entstehung des Summenwechselstromes aus den Vektorwechselströmen bei der QAM
- Fig.15: Frequenzverkleinerung eines binärcodierten Wechselstromes mit den Kennzuständen grosser und kleiner Amplitudenwert und Summierung der verkleinerten Wechselströme
- Fig.16: Eine PAM mit Halbwellenpulsen und mit Frequenzverkleinerung.
- Fig.17: 4 binärcodierte Kanäle
- Fig.18,19: Vektordiagramme für Summen- und Doppelsummenwechselströme
- Fig.20: Schaubild für die Summierung gleichfrequenter Wechselströme
- Fig.21: Summierung von gleichfrequenten Wechselströmen mit Bezug auf die Vektordiagramme der Fig. 18,19.
- Fig.22: Ein Vektordiagramm für die Quadraturamplitudenmodulation mit Dauerwechselströmen beider Vektoren zur Verhinderung grosser Phasensprünge.
- Fig.23: Kombinationen für das Vektordiagramm der Fig.18
- Fig.24: Schaltung für die Codierung von mehrstufigen Summen-Wechselströmen
- Fig.25: Ein Prinzipschaltbild für Duplexverkehr auf der Basis der Quadraturamplitudenmodulation.
- Fig. 26: Ein Schaltbild für Duplexverkehr für Zweieranschlüsse über Anschlussleitungen
- Fig.27: Ein Prinzipschaltbild für Duplexverkehr über Anschlussleitungen auf der Basis der Quadraturamplitudenmodulation ohne Gabeln
- Fig. 28: Eine Stromlaufübersicht für Duplexverkehr auf der Basis der Quadraturamplitudenmodulation für einen Teilnehmer und
- Fig. 29: Stromlaufübersicht für den Gegenteilnehmer
- Fig. 30: Übersicht eines Duplexverkehrs bei Vermittlungssystemen auf der Basis der QAM.
- Fig.31: Übersicht eines Duplexverkehrs mit zeitmultiplexer Zusammenfassung von Kanälen auf der Basis der QAM
- Fig. 32: Teilnehmerschaltung mit Duplexverkehr
- Fig. 33: Duplexverkehr über Funk auf der Basis der Quadraturamplitudenmodulation (QAM)
- Fig.34: Eine digitale Phasenschieberschaltung zur Feststellung der Empfangsphase und Festlegung der Sendephase
- Fig.35: Summenwechselstrom mit Vektorwechselströmen und den Kompensationsvektorwechselströmen für einen Kennzustand
- Fig.36: Summenwechselstrom mit Vektorwechselströmen und mit Kompensationswechselströmen für einen anderen Kennzustand
- Fig.37: Phasensprünge auf Frequenzbasis
- Fig.38: Codierung von Stereo-Kanälen auf der Basis der Pulsamplitudenmodulation
- Fig.39: Zusammenfassung mehrerer zeitmultiplex zusammengefasster Kanäle auf der Basis der QAM bezw. Doppel-QAM.
- Fig.40: Bekannte Schaltung für die Erzeugung unipolarer PAM
- Fig.41: Prinzip der Auswertung der Kennzustände durch Kompensation
- Fig.42: Codierung von 8 bit mit einer Periode.
- Fig.43,45: Zeitdiagramm für Bild- und Austastsignale beim heutigen Fernsehen
- Fig.46: PAM-Codierung der Bildsignale und Austastsignale
- Fig.44: Schaltung zur Erzeugung des Y- und der Farbdifferenzsignale

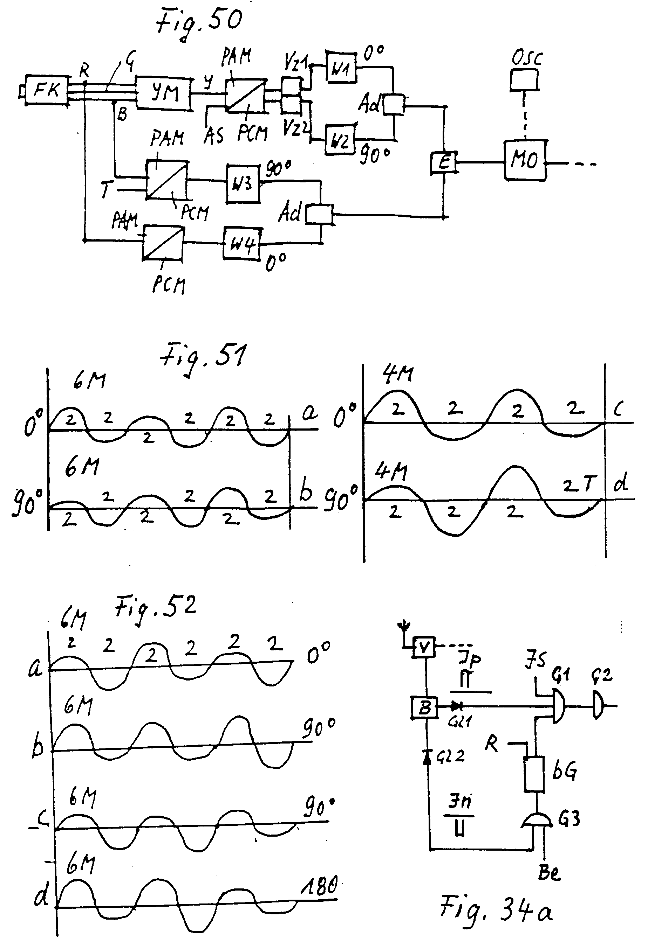

- Fig.47: Amplitudenspektrum bei Cos- und Rechteckimpulsen
- Fig.48: Verzögerungsschaltung für PAM-Pulse
- Fig.49: Halbwellenanordnung für analoge und digitale Fernsehsignale
- Fig.50,51,52: Ein Beispiel für ein Fernsehsystem.

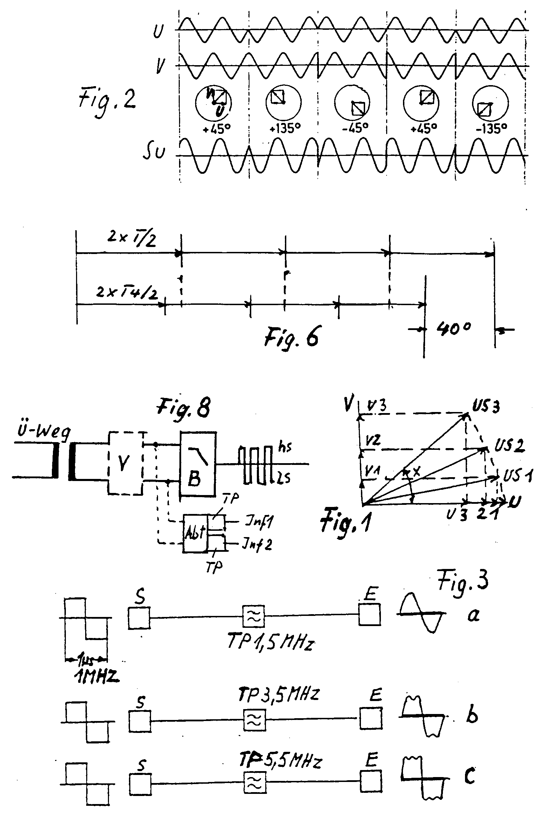

In der europäischen Patentanmeldung 0 197 529 ist ein Verfahren offenbart, wie man bei einer Phasenänderung bei der QAM eine zusätzliche Amplitudenänderung vermeiden kann. In der Fig.1 ist kurz nochmals das Prinzip an Hand des Vektordiagramms erläutert. Die beiden um 90 Grad phasenverschobenen Wechselströme sind u und v. In 3 Stufen soll ohne Amplitudenänderung der Phasensprung mit dem Winkel x eingestellt werden. u,us1, us2 und us3 sind also gleich gross. Um dies zu erreichen muss man gleichzeitig die Vektoren u und v ändern, und zwar u1/v1, u2/v2 und u3/v3. Da dadurch eine Phasenverschiebung keine zusätzliche Amplitudenänderung hervorruft, kann man als Code auch eine Amplitudenänderung vorsehen. Gemäss der vorliegenden Erfindung können solche Phasen- und Amplitudenänderungen noch einfacher und präziser gestaltet werden. An Hand der Fig. 3 wird dies näher erläutert. Auf der Sendeseite S werden Rechteckimpulse mit einer Frequenz von 1 MHz angeschlatet. Wird, wie in der Fig.3c dargestellt, in den Übertragungsweg ein Tiefpass TP 5,5 MHz eingeschaltet, erhält man beim Empfänger E beinahe noch einen Rechteckimpuls . Wird wie in der Fig.3b eingezeichnet, ein Tiefpass TP von 3.5 MHz eingeschaltet, ist die senkrechte Flankensteilheit nicht mehr vorhanden, wird dagegen wie in der Fig.3a dargestellt, der Tiefpass auf 1,5 MHz reduziert, so erhält man beim Empfänger E einen sinusähnlichen Wechselstrom mit der Periodendauer der Rechteckperiode. Da sich als die Periodendauer gegenüber dem Rechteckimpuls nicht ändert, kann man durch Veränderung der Periodendauern der Rechteckimpulse auch die Phase bezw. Frequenz des in der Fig.3a dargestellten sinusförmigen Wechselstromes ändern. Da eine solche Änderung immer beim Nulldurchgang erfolgt,erfolgt eine kontinuierliche Änderung und werden kaum Oberwellen erzeugt, d.h. die Übertragung ist schmalbandiger als bei den bisher üblichen Phasentastungen. In der Empfangsstelle kann dann auch die Änderung der Periodendauer als Mass für den Phasensprung vorgesehen werden. Eine solche Auswerteschaltung wird noch später beschrieben.

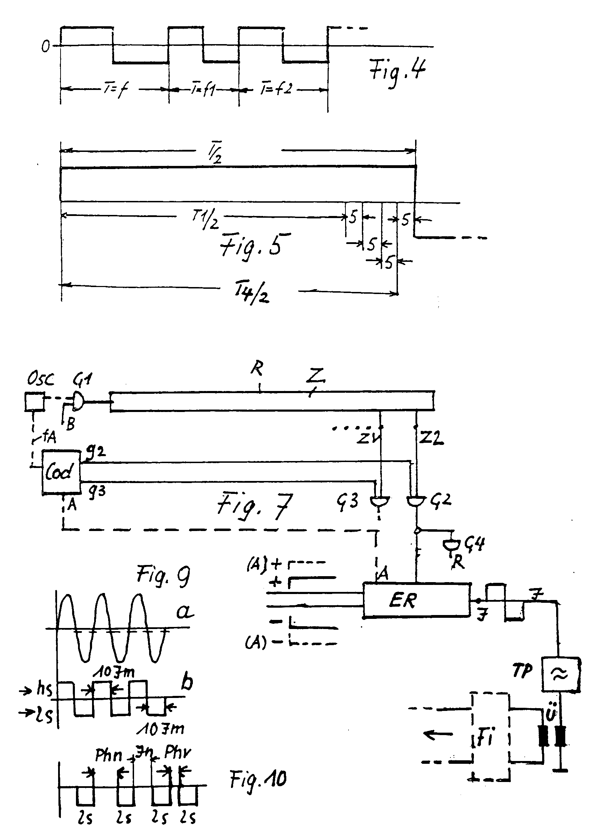

In der Fig.4 sind Rechteckimpulse mit verschiedenen Periodendauern T =f, T=f1 und T=f2 dargestellt. Nach einer analogen Anordnung nach der Fig.3a würde man auf der Empfangsseite einen sinusförmigen Wechselstrom mit den Perioden dauern T=1/f,T=1/f1 T=1/f2 erhalten. Da bei Phasensprüngen sich die Frequenz des Wechselstromes sich verkleinert oder vergrössert, entspricht die Frequenzänderung einem Phasensprung. Aus der Fig.2, die eine Phasentastung herkömlicher Art darstellt, geht dies deutlich hervor. Man sieht in dieser, dass bei jeder Phasenänderung eine Frequenzänderung erfolgt, jedoch nicht in kontinuierlicher Weise. Daher ist es auch schwer aus der Periodendauer auf der Empfangsseite die Grösse des Phasensprungs zu ermitteln. Um die Frequenzänderungen und damit auch das Frequenzband klein zu halten, kann man jeden Phasensprung in Stufen zerlegen. In der Fig.5 ist schematisch dies aufgezeichnet. In dieser ist T/2 die Halbperiodendauer eines Impulses und entspricht 180 Grad. Dieser Winkel wird in 36 Stufen zu je 5 Grad eingeteilt. Soll ein Phasensprung von 40 Grad zustandekommen, so wird die Halbperiode T/2 4 mal um 5 Grad gekürzt und natürlich die andere Halbperiode ebenfalls . Die Halbperiodendauer gegenüber dem Bezugsimpuls ist dann T1/2. Nach dem Phasensprung kann man entweder diese Frequenz belassen, oder aber wieder auf die Frequenz T/2 umschalten, indem man einen Phasensprung von 5 Grad in entgegengesetzter Richtung vorsieht. Gegenüber der Bezugsphase wäre dann immer noch eine Phasenverschiebung von 30 Grad vorhanden. In der Fig.6 sind zeitlich 4 mal die Perioden der Bezugsphase und 4 mal die Perioden der um 2x5 Grad gekürzten Perioden eingezeichnet. Beim Vergleich nach der 4. Periode ist der Unterschied von 40 Grad gegenüber der Bezugsphase ersichtlich. In der Fig.7 ist eine Schaltung einer Ausführungsform der Erfindung dargestellt. Es wird angenommen die Periodendauer in 72 Stufen zu unterteilen und zwar mit Phasensprungstufen von 5 Grad. Jeder Stufe sollen 10 Messimpulse zugeordnet werden, so sind für die Periodendauer 72x10=720 Messimpulse und für die Halbperiodendauer 360 Messimpulse erforderlich. Auf der Sendeseite brauchen immer nur die Halbperioden codiert werden. Die 2. Halbperiode wird dann jeweils über den Codierer Cod gesteuert. Werden Phasensprungstufen von 5 Grad vorgesehen, so sind für die Halbperiode, wenn die Änderung voreilend sein soll, 350 und bei einer nacheilenden Phasenänderung 370 Messimpulse erforderlich. Das Zählglied Z in der Fig.7 muss also mindestens 370 Ausgänge haben. Die Messimpulsfrequenz hängt also von der Codierfrequenz ab. Im Beispiel der Fig.7 wird im Oszillator Osc der Steuerwechselstrom für die Messimpulse erzeugt. Man kann damit unmittelbar über das Gatter G1 das Zählglied steuern, oder aber auch Pulse mittels eines Schmitt-Triggers oder einer anderen Schaltung erzeugen und mit diesen Pulsen dann das Zählglied Z schalten. Man kann auch durch Veränderung der Oszillatorfrequenz die Impulsdauer ändern. Angenommen wird der Ausgang Z2 am Zählglied Z markiert 370 Messimpulse, also die nacheilende Phasenverschiebung, dann wird vom Codierer Cod über g2 ein solches Potential an den einen Eingang des Gatters G2 gelegt, dass dann beim Erreichen des Zählgliedes Ausgang Z2, über das dann z.B. dasselbe Potential an den anderen Eingang von G2 gelegt wird, dass sich das Potential am Ausgang von G2 sich ändert , z.B. von h auf l. Im elektronischen Relais ER hat dies zur Folge, das Pluspotential + an den Ausgang J gelegt wird. Über die Verbindung A ist der Codierer Cod mit dem elektronischen Relais Er verbunden. Beim nächsten Überlauf des Zählgliedes Z bis Z2 wird über die Verbindung A ER so gesteuert, dass an den Ausgang J minus Potential - angelegt wird. Am Ausgang von ER können also bipolare Rechteckimpulse abgenommen werden. Man könnte genau so unipolare Rechteckimpulse erzeugen. Dieser Vorgang wiederholt sich solange vom Codierer Cod Potential an G2 angelegt wird. Sind z.B 5 Phasenstufen für einen Phasensprung vorgesehen, so wird das Zählglied Z 10mal bis Z2 geschaltet. Beim Ausgang Z2 erfolgt die Rückschaltung des Zählgliedes über das Gatter G4, R. Es können also durch eine verschieden grosse Zahl von Ausgängen am Zählglied Z und/oder durch Veränderung der Oszillatorfrequenz die Impulsdauer, die Stufenzahl und die Grösse der Stufen eingestellt werden. Die Steuerung dieser Varianten erfolgt über den Codierer Cod. Über fA kann eine Umschaltung der Oszillatorfrequenz, über die Anschlüsse g2,g3,... der Stufenzahl und ggf. die Phasenwinkeländerung und die Stufengrösse und über A die Amplituden der Rechteckimpulse J erfolgen. Im Beispiel sind 2 Grössen +/(A)+, -/(A)- vorgesehen. Die Rechteckimpulse J werden dann an einen Tiefpass analog der Fig.3a geschaltet und über einen Übertrager Ü z.B. auf den Übertragungsweg ggf. unter Zwischenschaltung eines Filters Fi, gegeben.

Am Gatter G1 muss über B noch Beginnpotential angelegt werden damit die Oszillatorpulse zur Wirkung kommen. Mit dieser Anordnung sind also folgende Codierungen möglich: eine voreilende, eine nacheilende , keine Phasenverschiebung. Diese können dabei auch stufenweise erfolgen. Die Phasendifferenz oder die Bezugsphase kann verwendet werden. Zusätzlich kann eine Amplitudencodierung ggf. stufenweise vorgesehen werden. Eine weitere Möglichkeit besteht darin die Codierung beim positiven oder negativen Impuls bezw. Halbwelle vorzunehmen. Auch die Zahl der Rechteckimpulse ist ein weiteres Codemittel. Man kann auch eine Harmonische der Rechteckimpulse aussieben. Erfolgt dies z.B. bei der 3. Harmonischen,so sind 3 Perioden in einem plus/minus-Impuls enthalten. In diesen 3 Periodendauern sind dann auch, wenn die Impulsdauer verändert wird, die Phasenverschiebungen enthalten.

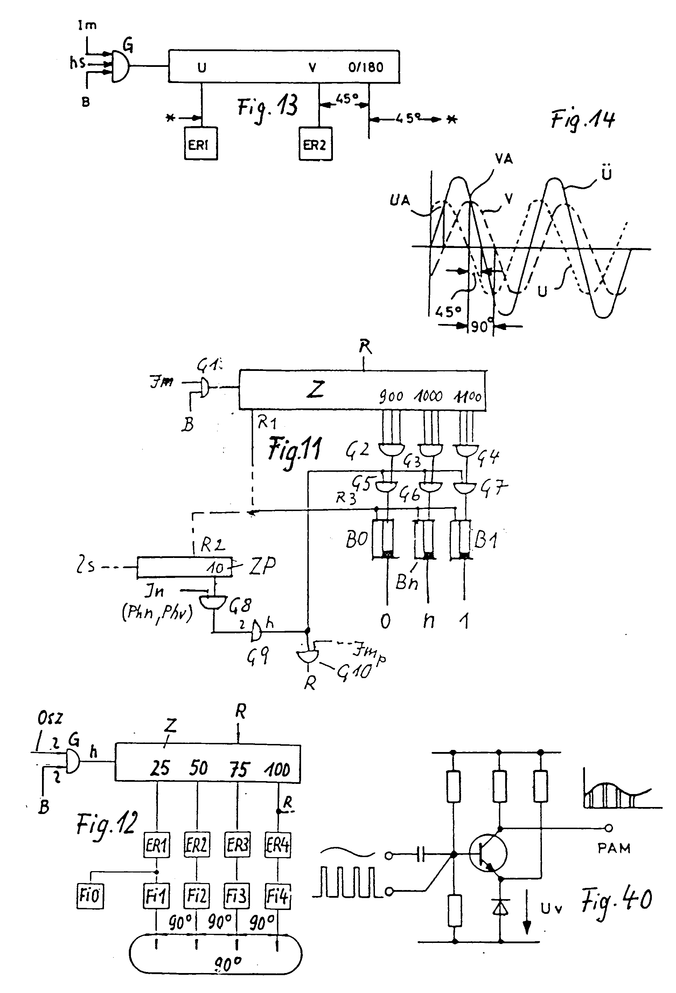

Wie bereits erwähnt erfolgt vorzugsweise die Auswertung der Phasenverschiebungen durch Abmessung der Periodendauern. Bei der QAM ist bekannt, dass die Nulldurchgänge der Vektorenwechselströme vom Nulldurchgang des Summenawechselstromes 45 Grad vor- und nacheilend sind. Wird z.B. mit einer Anordnung analog der Fig.7 die Halbperiode des Summenwechselstromes vom Nulldurchgang zu Nulldurchgang abgemessen, so kann man vom Nulldurchgang aus jeweils 45 Grad vor- und nacheilend ebenfalls abmessen, sodass man bei einer Probeentnahme bei 45 Grad nach und voreilend die Amplitudenwerte der Vektorwechselströme erhält. Nachstehend werden nun an Hand von Zeichnungen die Auswertung von Phasenstufen aufgezeigt. Der vom Übertragungsweg in Fig.8 kommende Codierwechselstrom wird, ggf. über einen Verstärker V, einem Begrenzer zugeführt - es kann z.B. auch ein Schmitt-Trigger sein -. Im Begrenzer werden die Wechselstromperioden in Synchronimpulse hs/ls, wie aus der Fig.9 hervorgeht, umgewandelt. In der Fig.9a ist der empfangene Wechselstrom und in Fig.9b die Synchronimpulse nach dem Begrenzer. Die Messimpulse, mit denen die Halbperiodendauern gemessen werden, haben die 1o-fache Frequenz , in Fig.9b mit 10Jm bezeichnet. In der Fig.10 ist der Abstand zwischen 2 ls-Impulsen, die aus den negativen Halbwellen des Codierwechselstromes gewonnen werden, bei nacheilender Phasenverschiebung Phn und bei voreilender Phasenverschiebung Phv, wenn nur die hs-Impulse zur Messung vorgesehen werden. In der Fig. 11 ist eine diesbezügliche Auswerteeinrichtung dargestellt, bei der mit Hilfe der Messimpulse Jm die Summe von Phasenverschiegungen von 10 Phasenstufen, die jeweils durch eine Periode codiert werden, gemessen wird. Für die Abzählung der Messimpulse ist ein Zählglied Z und für die Abzählung der Phasenstufen bezw. Perioden ein Zählglied ZP vorgesehen. 3 Verschieden grosse Phasenstufen von denen jeweils die Summe von 10 Stufen einen Kennzustand markieren sind vorgesehen. Die Kennzustände 0,n und 1 werden also durch 10 Phasenstufen bezw. Perioden mit je 90,100 und 110 Messimpulsen gekennzeichnet. Am Gatter G1 sind einmal die Messimpulse JM und am anderen Eingang B ein Beginnpotential, das mit dem Beginn der 1. Phasenstufe angelegt wird. Nach 10 Phasenstufen kann der Ausgang 900,1000 oder 1100 erreicht werden. Dabei ist jedem Kennzustand eine Toleranz von +/- 1 Impuls zugeordnet. Die Toleranz kann natürlich auch wesentlich grösser gewählt werden. Die ls-Impulse steuern das Zählglied ZP. Sind die 10 Perioden ohne Phasenverschiebung ,so wird der Ausgang 1000 am Zählglied Z erreicht. Das Zählglied ZP wurde in dieser Zeit mit den ls-Impulsen bis zum 10. Ausgang geschaltet.-Mit dem Beginn der 11. Periode, muss wieder geprüft werden, ob ein 0,n oder 1 Kennzustand durch den ankommenden Wechselstrom codieert ist. - Die Auswertung des Kennzustandes n und Zurückschalten der Zählglieder erfolgt folgendermassen. Beim erreichen des Ausganges 1000 erfolgt am Ausgang des Gatters G3 ein Potentialwechsel. Dieser Ausgang liegt am Gatter G6 . Am 10. Ausgang des Zählgliedes ZP liegt das Gatter G8 und am anderen Eingang des Gatters G8 die Impulse Jn bezw. hs. Mit dem Beginn des 11. hs-Impulses sind an den Eingängen von G8 zwei h- Potentiale und am Ausgang von G8 l-Potential. Dieses Potential wird an G9 umgepolt, sodass am Ausgang von G9 h-Potential liegt. Dieses ist auch an das Gatter G6 geführt, dadurch wird am Ausgang von G6 das Potential umgekehrt. Das bistabile Glied Bn wird damit in die Arbeitslage gebracht. - Da man was das Potential anbelangt, durch ein Potentialumkehrgatter,z.B. G9, immer das richtige Potential herstellen kann, wurde bei den Gattern immer nur von der Wirkung gesprochen.- Durch das nunmehrige Ausgangspotential ist der Kennzustand n markiert. Die Rückschaltung des Zählgliedes Z erfolgt über das Gatter G10. Mit dem 11. Jn bezw hs-Impuls erfolgte eine Potentialumkehr bei G8 und G9. Über Jmp wird zusätzlich an den 2. Eingang von G10, also in der Messimpulspause, ebenfalls h-Potential gelegt, sodass am Ausgang R ein Potentialwechsel stattfindet. Über R wird das Zählglied Z in die Ausgangsstellung geschaltet. U.U. muss noch ein Potentialwechselgatter nach dem Gatter G10 eingeschaltet werden. Die Rückstellung des Zählgliedes ZP und der bistabilen Glieder BO,Bn und B1 erfolgt mit einem Ausgang R1 des Zählgliedes Z. R1 kann z.B der 2. oder 3. Ausgang des Zählgliedes Z sein. Wird dieser Ausgang erreicht, wird durch den damit verbundenen Potentialwechsel über R2 ZP-Zählglied in die Ausgangsstellung und auch die bistabilen glieder Bo,Bn,B1 in die Ruhestellung zurückgeschaltet. Die Auswertung der Kennzustände 0 oder 1 erfolgt auf dieselbe Weise.

In den verschiedensten Schaltungen , wie z.B. bei der Quadraturamplitudenmodulation (QAM) werden um 90 Grad gegeneinander phasenverschobene Wechselströme benötigt. In der Fig.12 ist ein Schaltungsprinzip zur Erzeugung solcher phasenverschobener Wechselströme gleicher Frequenz dargestellt. Analog der Fig.11 wird das Zählglied Z durch einen Wechselstrom, der im Oszillator Osz erzeugt wird und über das Gatter G , an dessem anderen Eingang ein Beginnpotential B liegt, geführt wird, gesteuert. Im Beispiel sollen 4 Rechteckimpulse erzeugt werden, die gegeneinander um 90 Grad phasenverschoben sind.Hat das Zählglied Z 100 Ausgänge , so sind beim 25.,50.,75. und 100. Ausgang elektronische Relais ER1 bis ER4 analog dem ER-Relais in der Fig. 11 anzuschalten.Mit diesen elektronischen Relais werden dann wie bereits in der Fig.11 beschrieben, Rechteckimpulse erzeugt. Hier sind in den ER-Relais noch Mittel, die bei bipolaren Rechteckimpulsen immer eine Potentialumkehr vornehmen und bei unipolaren Rechteckimpulsen das Potential während eines Durchlaufs wegnehmen.Die Rechteckimpulse werden dann, in der Fig.11 mit J bezeichnet, werden dann über die Filter Fi1 bis Fi4 gesendet. Der dann entstehende Wechselstrom hat jeweils 90 Grad Phasenverschiebung gegenüber dem vom nächsten Ausgang erzeugten. An Stelle von phasenverschobenen Wechselströmen kann man durch die Ausgänge auch um 90 Grad phasenverschobene Abnahmen von z.B. PAM-Proben steuern.

Am elektronischen Relais ER1 ist noch ein Filter FiO angeordnet das z.B. nur die 3. Oberwelle des Rechteckimpulses durchlässt, sodass man hier die 3-fache Frequenz der Rechteckimpulse erhält. Die Phasenverschiebung wird dann auf die 3. Oberwelle übertragen.

In der Fig.13 ist eine Prinzipschaltung dargestellt, wie man bei der Auswertung des Summenwechselstromes bei der QAM wieder die Werte der Amplituden der beiden Vektor- bezw. Codierwechselströme U und V zurück erhalten kann. An Hand der Fig.14 sol dies näher erläutert werden. Der Summenwechselstrom Ü ist aus der Addition der beiden um 90° Phasenverschobenen Codierwechselstrome U und V entstanden. Beim Nulldurchgang des Codierwechselstromes V, dies erfolgt 45° nach dem Nulldurchgang von Ü, bestimmt nur mehr die Amplitude UA die Grösse des Augenblickwertes der Halbwelle von Ü und bei 135° nach dem Nulldurchgang von Ü ist der Nulldurchgang von U. Hier bestimmt dann nur mehr die Amplitude VA die Grösse des Augenblickwertes der Halbwelle von Ü. In der Fig.13 ist das Schaltungsprinzip für die Ermittlung der beiden Amplituden der Codierwechselströme dargestellt. Angenommen wird, dass die Periode als Codeelement vorgesehen wird, dann genügt nur mehr eine Halbwelle zu messen. Sollen z.B. vom Summenwechselstrom der Fig.9a die Vektor- bezw. Codierwechselströme ermittelt werden, dann werden Halbwellenimpulse hs wie in der Fig. 8 dargestellt, die aber im Beispiel aus dem Summenwechselstrom Ü mit der in der Fig.14 eingezeichneten Phase als Bezugsphase gewonnen werden, über das Gatter G an das Zählglied angelegt. An diesem Gatter liegen noch die Steuerimpulse Jm mit der Frequenz, dass während eines hs-Impulses das Zählglied von 0 bis 180 geschaltet wird. An den Ausgängen des Zähl bezw. Zeitgliedes 45° und 135° sind die elektronischen Relais ER1 und ER2 angeordnet, die jeweils beim Überlauf zur Wirkung kommen und eine Messung am Codiersummenwechselstrom vornehmen, von der PAM her sind solche Abgriffe bekannt. Damit sind die Werte der Amplituden der beiden Codierwechselströme bestimmt.

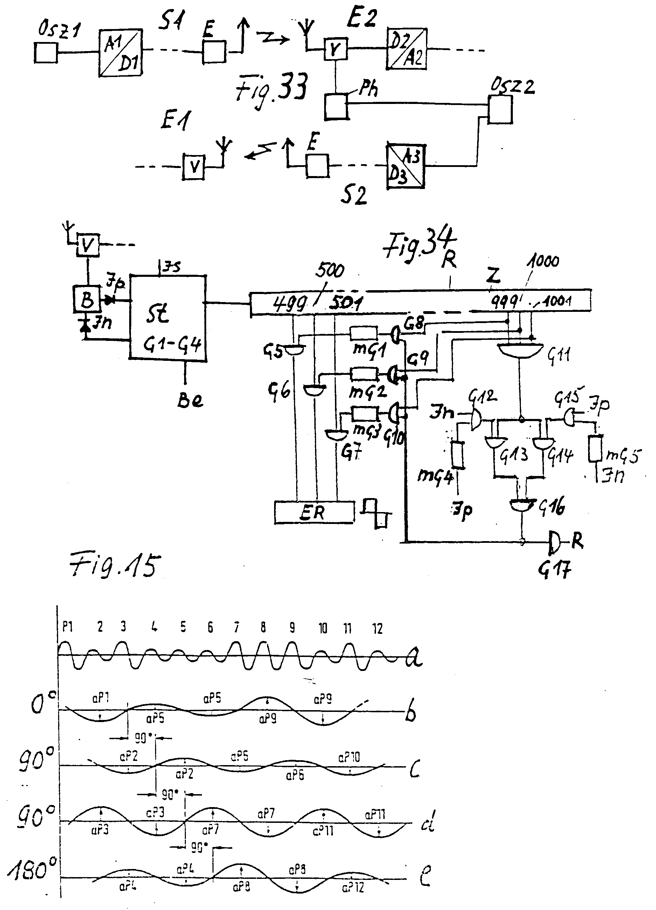

In der Fig.15a ist ein Code aus binären Codeelementen aufge zeichet, die aus den Halbwellen bezw. Perioden eines Wechselstromes, die in einer ununterbrochenen Folge von positiven und negativen Halbwellen gesendet werden, bestehen. Die beiden Kennzustände werden dabei durch einen grossen und kleinen Amplitudenwert gekennzeichnet. In der Fig.15a werden die Perioden als Codeelemente verwendet. Für die Codierung eines Sprachkanales werden also 64 KHz benötigt. Aus übertragungstechnischen Gründen ist es oft zweckmässig eine kleinere Frequenz für die Übertragung des Codierwechselstromes zu wählen. Bei der halben Frequenz sind 2 Codierwechselströme von 32 KHz, bei einem Viertel der Frequenz sind 4 Codierwechselströme zu je 16 KHz erforderlich. Die Codierwechselströme bezw. die Abgriffe der Probeentnahmen sind dann 180 bezw. 90 Grad auseinander. Diese Prinzip ist in der Europäischen Patentanmeldung 0110427 A2 offenbart. In den Fig.15b bis e wird der Sprachkanal in 4 Codierwechselströme untergebracht. Zeitmultiplex werden dann hinter dem Codierer die binären Werte abgegriffen. Sowohl die zeitmultiplexen Probeentnahmen als auch die um 90 Grad gegeneinander versetzten Codierwechselströme können dabei mit einer Schaltungsanordnung der Fig.12 erzeugt werden, also wesentlich einfacher als bisher. Bei Verwendung der Halbwellen als Codeelemente hat der Codierwechselstrom nach Fig.15a nur eine Frequenz von 32 KHz und die Codiervechselströme der Fig. 15b bis 15e Frequenzen von 8 KHz.

In der Fig.16 werden PAM-Pulse mit den Halbwellen bezw. Perioden , ebenfallss in der Europäischen Patentanmeldung 0110427 A2 offenbart, codiert. In Fig.16b sind die Codeelemente die Perioden und in der Fig.16c die Halbwellen. Der Codierwechselstrom der Fig.16b ist hier wieder in 4 Codierwechselströme mit je einem Viertel der Frequenz aufgeteilt, wobei jeder vom anderen eine 90 Grad Phasenverschiebung hat. Die Abgriffe der PAM-Proben erfolgen dabei ebenfalls zeitmultiplex. Sowohl die Folge der Probeentnahmeabgriffe, als auch die um 90 Grad phasenverschobenen Codierwechselströme werden dabei mit der Schaltung der Fig.12 erzeugt.

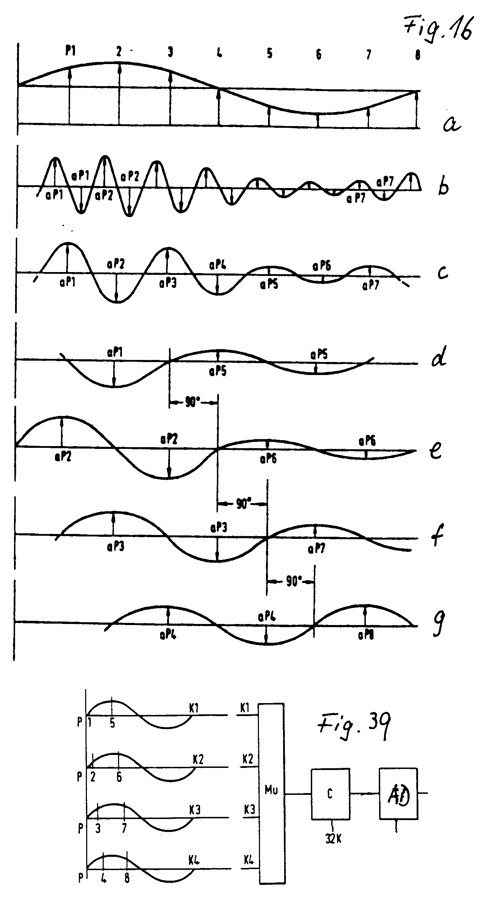

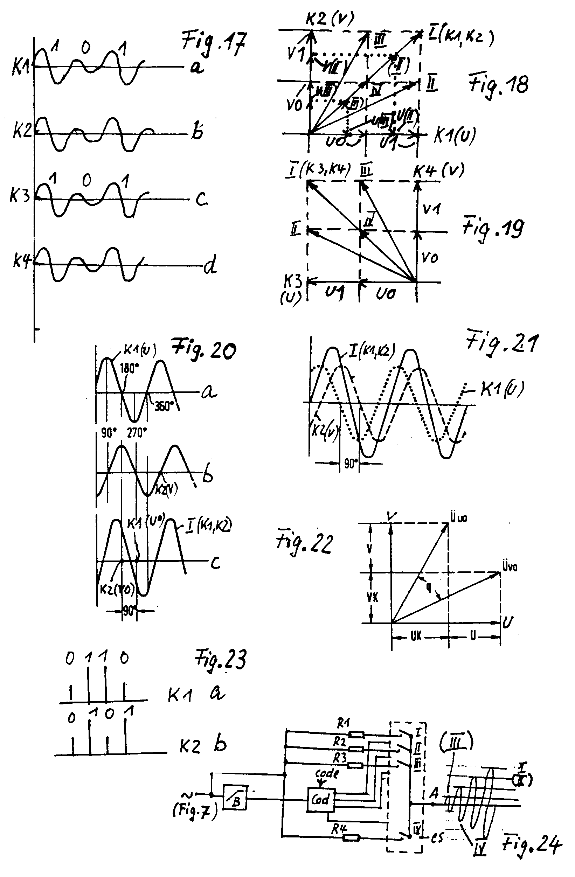

Eine weitere vorteilhafte Anwendung der Erfindung wird nachstehend an Hand der Zeichnungen näher erläutert. Diese lässt sich vorteilhaft bei Anschlussleitungen im Simplex- und Duplexverkehr mit einem oder mehreren Kanälen, bei Wählsternschaltern, bei der Datenübertragung als auch bei der Sprachübertragung analog oder digital einsetzen. Beim Rundfunk können mit einer Frequenz eine Vielzahl von Programmen übertragen werden, dasselbe gilt auch für das Fernsehen, für Richtfunk und andere Funkarten In den Fig.17a-d sind 4 Kanäle mit binärcodierten Zeichen dargestellt.Als Codeelement wird die Periode bestimmt und zwar der Kennzustand 1 mit grosser und der Kennzustand O mit kleiner Amplitude. Die Kanäle 1+2 sollen addiert werden. Für diesen Zweck müsste der Kanal 2 um 90 Grad phasenverschoben werden. In der Fig.18 ist dies vektorenmässig dargestellt. Der Vektor des Wechselstromes K1(u) ist gegenüber dem Vektor des Wechselstromes k2(v) um 90 Grad phasenverschoben Wie aus der Fig.23 hervorgeht, können 4 verschiedene Kombinationen entstehen. uo+vo ergibt den Summenvektor IV, u1+v1 ergibt den Summenvektor I, u1+vo ergibt den Summenvektor II und v1+uo den Summenvektor III. Man sieht hieraus, dass bei den Vektoränderungen auch Phasenänderungen entstehen. Wie aus den Fig. 20/21 hervorgeht, entsteht hier ein Summenwechselstrom mit einer ungefähren Phasenlage von 45 Grad. Die Kanäle 3+4 werden ebenfalls zu einem Summenwechselstrom vereinigt, wie aus der Fig.19 hervorgeht. Der Vektor K4(v)hat dabei die Phase von 90 Grad und der Vektor k3(u) 180 Grad. Die Summenvektoren I(k1,k2) und I (k3,k4) sind gegeneinander um 90 Grad phasenversetzt. Die Summenwechselströme von k1+k2 und k3+k4 kann man wieder addieren, sodass man wieder einen Summenwechselstrom k1+k2+k3+k4 erhält.

Aus der Fig 22 geht hervor, je grösser die Amplitude des Codeelements uO+vO bezw. uk/vK ist, deste kleiner ist auch der Phasensprung q. Damit die Streuung bei der Auswertung der 4 Codierwechselströme klein gehalten werden kann werden z.B. in Fig.18 die Kombinationen, die auf dem 45 Grad Sunmenvektor liegen , also I+IV belassen , aber die Codekobinationen II und III werden auf den 45 Grad Summenvektor gelegt, z.B. II auf (II) und III auf (III). Sendeseitig kann man also einen ganz normalen Wechselstrom mit den 4 Amplitudenstufen senden. Dasselbe wird auch in Fig 19 vorgenommen. Die Summenwechselströme I(k1,k2) und I (k3,k4) sind gegeneinander um 90 Grad phasenverschoben und werden bei der Übertragung addiert, sodass man 4 Kanäle mit einem Codierwechselstrom übertragen kann. Wird auf der Empfangsseite z.B. (III) ausgewertet, so heisst dies, dass dem Kanal K1 der Kennzustand uo und dem Kanal k2 der Kennzustand v1 zugeordnet werden muss. Zu (II) gehören die Kennzustände u1,vo. Wie aus der Fig 21ersichtlich ist, sind die Codierwechselströme K1(u) und k2(v) vom Summenwechselstrom I(k1,k2) vom Summenwechselstrom 45 Grad vor-und nacheilende phasenverschoben. Dasselbe gilt auch für die Wechselströme I(k1,k2)und I(k3,k4), die ja bei der Übertragung die Lage analog k1(u) und k2(v) der Fig. 21 einnehmen. Bei der Auswertung der Additionswechselströme muss man also nur um 45 Grad vor-und nacheilende Wechselströme erzeugen und beim Nulldurchgang jeweils eine Messung beim Summenwechselstrom vornehmen wie es bei der Quadraturamplitudenmodulation üblich ist. Die Quasi-Werte z.B. in Fig 18 (II) und (III) müssen dann in entsprechende Kennzustände umgesetzt werden. Die Erzeugung der um 45 Grad versetzten Wechselströme kann man z.B. mit einer Anordnung der Fig 12+13 bewerkstelligen. Die Summenwechselströme werden dann über einen Begrenzer geführt und mit Hilfe der entstehenden Impulse kann man dann die Halbperiodendauern ermitteln . Damit sind dann auch die 45 Grad Wechselströme festgelegt.

In der Fig 24 ist eine Schaltung dargestellt, mit der ein Summenstrom z.B. I(k1k2) mit den Kennzuständen I,(II),(III) und IV erzeugt werden kann. Der in der Fig.1 2 erzeugte Wechselstrom wird einem Begrenzer B zugeführt, in dem dann die Steuerimpulse erzeugt werden. Ausserdem sind elektronische Relais I,II,III,IV es vorhan den, die über den Codierer Cod gesteuert werden. Über Code werden die Kennzustände der jeweils beiden Kanäle zugeführt, z.B. entsprechend der Fig 23, 00/11/10/01. Durch die jeweilige Kombination dieser Kennzustände werden dann die elektronischen Relais es gesteuert. Ist durch die Kennzustandskombination der beiden Kanäle eine Amplitude I erforderlich, so wird der Widerstand R1 in den Wechselstromkreis eingeschaltet. So erhält man also einem Wechselstrom mit 4 Amplitudenstufen. Die Begrenzerimpulse haben die Aufgabe, dass nur immer beim Nulldurchgang eine Umschaltung auf eine andere Amplitudenstufe erfolgt.

Die Methode der Quasi-Kenn zustände der Fig 18 I,(II), IV und (III) könnte man z.B. nochmals anwenden, sodass dann auf einem analogen Summenwechselstrom I(k1,k2) 16 Amplitudencodierungen wären. An Stelle des Binärcodes kann man einen 3-wertigen Code also mit 3 Amplitudenstufen je Halbwelle vorsehen.

In der Fig. 15a ist eine binärcodierte Information dargestellt, bei dem als Codeelemente die Periode eines Wechselstromes vorgesehen wird. Die Kennzustände sind ein grosser und ein kleiner Amplitudenwert. Den Codierwechselstrom kann man verkleinern, im Beispiel werden 4 Codierwechselströme mit je 1/4 Frequenz vorgesehen. Der Abgriff muss dann so erfolgen, dass die 4 Codierwechselströme gegeneinander eine Phasenverschiebung von 90 Grad aufweisen. Will man nun alle 4 Codierwechselstrom mit einem Wechselstrom entsprechend den Fig 18/19 übertragen, so müssen die Probeentnahmen so gespeichert werden, dass die Codierwechsel ströme die Phasen 0 Grad, 90 Grad, 90 Grad und 180 Grad aufweisen. Werden dann die Codierwechselstrom 10b,c und 10 d,e addiert, so haben die beiden Summenwechselströme die Phasenlage von 45 und 135 Grad. Der Phasenunterschied zwischen den beiden ist wieder 90 Grad, sodass sie wieder addiert werden können. Mit einem 16 KHz Codierwechselstrom kann also der 64 KHz Codierwechselstrom übertragen werden. Verwendet man die Halbwelle als Codeelement, so kommt man auf 8 KHz herunter. Dasselbe kann auch bei der PAM vorsehen, bei der die Probeentnahmen durch die Amplituden der-Halbwellen codiert werden, z.B. entsprechend der europäischen Patentanmeldung Fig.1.Nr.0110427.

Man kann dieses Prinzip der 4- oder mehrfachen Übertragung mit nur einem Wechselstrom auch beim Duplexbetrieb anwenden. In den folgenden Beispielen wird der Einfach heithalber nur mit 2 Codierwechselströmen und einem Summenwechselstrom gearbeitat.

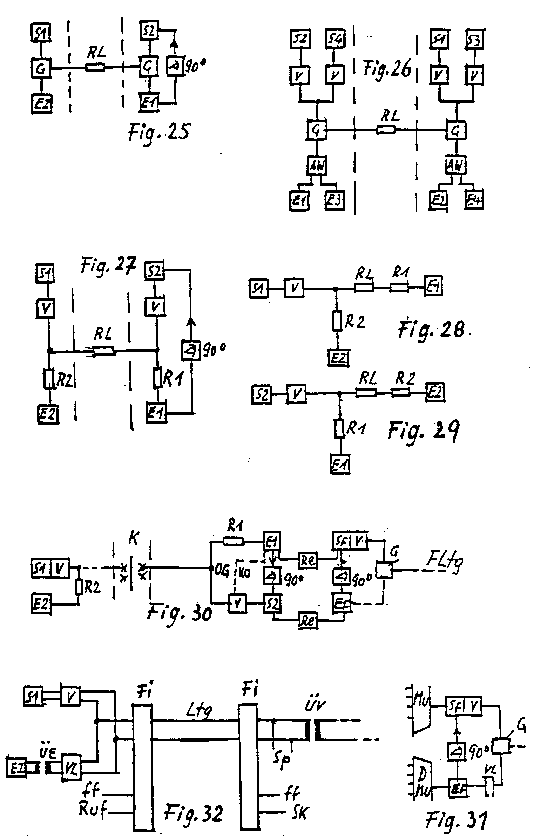

Nachstehend wird das Duplexverfahren mit nur einem Wechselstrom erläutert. In der Fig 25 ist ein Prinzip der Erfindung dargestellt. Die Sprachübertragung erfolgt dabei mit einem Codierwechselstrom, bei dem die Amplituden der Halbwellen bezw. Perioden die Codeelemente darstellen. Der Code kann dabei digital, z.B. ein Binärcode mit den zwei Kennzuständen grosser und kleiner Amplitudenwert, sein, entsprechend dem Patent DE 30 10 938, oder aber auch analog, bei dem die Probeentnahmen ebenfalls auf die Amplituden der Halbwellen bezw. Perioden eines Wechselstromes übertragen werden, oder analog wie bei der PAM.(Kanadisches Patent 1 214 277). Werden Halbwellen als Codeelemente vorgesehen, so ist bei digitaler, also PCM-Codierung die Frequenz 32 KHz und bei analoger Codierung 4 KHz. Für beide Übertragungsrichtungen wird derselbe Codierwechselstrom vorgesehen, die aber gegeneinander um 90 Grad phasenverschoben sind. In Fig 25 ist S1 das Mikrofon und E2 der Hörer des einen Teilnehmers und S2 und E1 des anderen Teilnehmers. In S1 ist noch ein Codierer, in dem aus der Sprache der Codierwechselstrom gewonnen wird. Von S1 geht der Codierwechselstrom über eine Gabel G, die Anschluss- bezw. Verbindungsleitung RL zur Gabel G des Gegenteilnehmers und zum Hörer E1. In diesem ist zusätzlich ein Decodierer, der aus dem Codierwechselstrom wieder die ursprüngliche Sprache herstellt. Der Codierwechselstrom von S1 sei der Synchronwechselstrom. Von E1 wird dieser über einen Phasenschieber 90 Grad zu S2 abgezweigt, in dem er ggf. vergtärkt wird. Spricht nun S2, so wird ein um 90 Grad phasenverschobener Codierwechselstrom über G, RL, G nach E2 gesendet, dort decodiert und dem Hörer als Sprache übermittelt.

Wenn z.B. kurzzeitig gleichzeitig gesprochen wird, entsteht auf dem Übertragungsweg RL ein Additionswechselstrom, wie in den Fig. 14,Ü dargestellt, die später noch beschrieben werden.

Dieses Prinzip ist genau so beim Duplexverkehr bei der Datenübertragung anwendbar. Da bei Sprachverkehr normal nur ein Teilnehmer spricht lässt sich auf dieser Basis nur über eine Leitung RL 2 rufende und 2 gerufene Teilnehmer anschliessen. In Fig 26 ist das Prinzip eines solchen Zweieranschlusses dargestellt. Folgende Mikrofone und Hörer gehören zusammen. S2/E1, S4/E3, S1/E2 und S3/E4. Die Sprache der Teilnehmer S1 und S2 werden z.B. mit dem einem Wechselstrom und die Sprache der Teilnehmer S3 und S4 mit dem um 90 Grad phasenverschobenen Wechselstrom gleicher Frequenz codiert. Sprechen gerade S2 und S4, so gehen beide Codierwechselströme über ihre Verstärker V zur gemeinsamen Gabel, über die Anschlussleitung RL, ggf. über Koppler, über die Gabel der Gegenseite zum Auswerter AW. In diesem werden die Amplituden der beiden Wechselströme ausgewertet, den entsprechenden Hörern zugeordnet , wobei die nun erfassten Probeentnahmen bezw. PCM-Code wieder in Sprache umgesetzt werden. In der Auswerteeinrichtung AW sind also entsprechende PCM/Analog bezw. PAM/Analog. Wandler angeordnet. Mit einem Wechselstrom einer Frequenz können also gleichzeitig 2 Gespräche geführt werden. Die noch freie Bandbreite steht für andere Zwecke zur Verfügung.

Die in den Fig. 25/26 vorgesehenen Gabeln brauchen keine extremen Eigenschaften aufweisen.

In der Fig 27 ist eine andere Anordnung wie in Fig25 gemäss der Erfindung dargestellt. Bei dieser entstehen für jede Verbindung Zweigstromkreise , wie die Fig.28/29 zeigen. Dem Teilnehmer S1 ist ein Codierwechselstrom und dem Teilnehmer S2 derselbe Wechselstrom , jedoch um 90 Grad phasenverschoben, zugeteilt. Der Mikrofonwechselstrom wird in S1 quantisiert und zu einem PCM-Codierwechselstrom entsprechend der Fig.15a , oder aber zu einen PAM-Wechselstrom z.B. entsprechend der Fig. 16b umgewandelt. Über den Verstärker V geht dieser Codierwechselstrom über die Leitung RL, den Widerstand R1 zum Empfänger bezw. Hörer E1. In E1 werden die Probeentnahmen zurückgewonnen und im PAM/Analog-Wandler wieder die Sprache hergestellt. Von E1 wird ein Teildes Codierwechselstromes über einen Phasenschieber von 90 Grad für S2 abgezweigt und dadurch eine Synchronisierung der beiden Codierwechselströme erreicht. Die Fig.28/29 zeigen die beiden Gesprächsrichtungen. Die Zweigstromkreise gehen in die Reichweite der jeweiligen Verbindung ein. Die Widerstände R1 und R2 müssen an die Leitungsdämpfung RL angepasst werden. Die Anordnung der Fig 25 ist diesbezüglich einfacher.

Man kann natürlich eine zentrale Synchronisierung der beiden Codierwechselströme vornehmen.

In Fig 30 ist das Prinzip der Anwendung der Erfindung in einem Vermittlungssystems für eine Fernverbindung dargestellt. In S1 wird die Sprache quantisiert und in einen digitalen oder analogen Codewechselstrom umgewandelt. Die Verbindung geht dann über die Anschlussleitung über Koppelfelder den Widerstand R1 zur Empfangsstelle E1. Bei digitaler Codierung wird in Re der Codewechselstrom regeneriert. Bei einem Binärcode muss nur zwischen grosser und kleiner Amplitude unterschieden werden. Da der um 90 Grad phasenverwschobene Wechselstrom über R1 auch einen Rückfluss erzeugt, kann man eine Kompensation in der Weise möglich machen, indem man über die Verbindung KO einen ggf. vorhandenen Codewechselstrom an den Empfänger E1 leitet.Da die Phasen der Codierwechselströme bekannt sind, kann man auch mit Hilfe von Phasenvergleicher den Störcodierwechselstrom kompensieren. Der phasengerechte Codierwechselstrom wird über Sender SF, den Verstärker V die Gabel G an die Fernleitung angeschlossen. Wird bei OG ebenfalls eine Gabel vorgesehen, ist bei digitaler Binärcodierung überhaupt keine Kompensation erforderlich. Der von der Fernleitung kommende Codierwechselstrom der anderen Phase geht über die Gabel zum Empfänger EF zum Regenerator Re, Sender S2, Verstärker V über die Koppelfelder der Vermittlungsstelle K, Anschlussleitung,Teilnehmer R2, E2. In E2 ist ein PAM/Analog bezw. ein PCM/Analog-Wandler, der den Codiervechselstrom in Sprache umsetzt, und dem Hörer zuführt. Von den Empfängern wird jeweils über 90 Grad Phasenschieber für die Sender ein Codierwechselstrom abgezweigt. Wie bereits erwähnt, kann die Speisung mit den Codierwechselströmen auch von der Vermittlungsstelle zentral erfolgen. Auch der Codierwechselstrom des Teilnehmers kann von der Vermittlungsstelle aus synchronisiert werden. Beim Fernleitungsabschnitt gibt es immer eine steuernde Seite. Der Sender der Gegenseite muss dann vom Empfänger der Gegenseite gespeist werden. Der Summenwechselstrom wird sich phasemmässig auf der Fernleitung etwas ändern und zwar in Abhängigkeit vom Widerstand , also der Dämpfung für die Einzelcodierwechselströme.

Bei Fernleitungen wird man eine Bündelung mit Hilfe von Zeitmultiplexern vornehmen. Eine Zeitstufe, ist dabei nicht erforderlich. Angenommen wird, der digitale Codierwechselstrom hat 32 KHz, wobei die Halbwellen die Codeelemente darstellen, dann werden die negativen Halbwellen gleichgerichtet. Aus den Halbwellen wird dann mittels eines Begrenzers ein Gleichstrompuls erzeugt. Sollen 10 Kanäle zusammengefasst werden, würden 320 KHz als Codierwechselstrom notwendig. Da zwischen den Halbwellengleichstrompulsen noch Pausen sind, ist es zweckmässig z.B. die Frequenz von 11 abgehenden Kanälen, also 352 KHz zu wählen. Am Anfang bezw. Ende des Multiplexers wird also noch ein Blindabgriff vorgesehen. Wie aus der Fig 31 hervorgeht, sind die übrigen Schaltungen für die Fernleitung genau so wie bereits in der Fig30 beschrieben. Lediglich die Multiplexer und Demultiplexer Mu und DMu sind eingefügt.

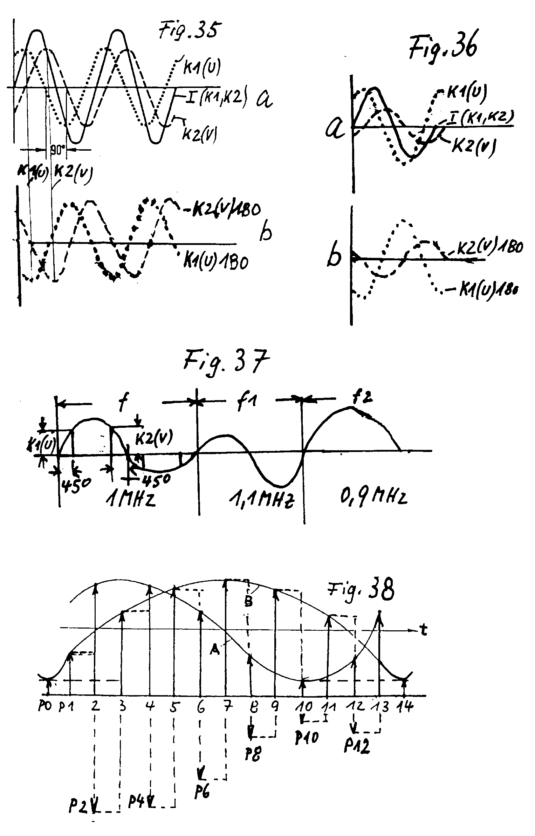

In der Fig 32 ist eine Teilnehmerschaltung im Prinzip gemäss der Erfindung dargestellt. Wie bisher üblich wird durch Gleichstromschleifenschluss der Verbindungsaufbau eingeleitet. Über Sp erfolgt die Speisung und die Schleifenüberwachung. Die Wahl könnte durch Gleichstromimpulse, mit dem Mehrfrequenzverfahren oder aber auch mit dem Codierungswechselstrom erfolgen. Dies könnte z.B. durch eine vorbestimmte Zahl von grossen und kleinem Amplituden des Codierwechselstromes geschehen. Eine solche wäre genau so sicher wie das MFV. Da nur eine Frequenz mit geringer Bandbreite für die Sprechverbindung erforderlich ist, werden mit Filter Fi die Frequenzen der nicht ausgenützten Bandbreite ausgesiebt, d.h. für andere Zwecke vorgesehen. In der Fig 32 mit ff bezeichnet. Den Rufstrom kann man über SK wie bisher an die Leitung schalten und dem Teilnehmer unter "Ruf" dem Teilnehmerapparat zuführen. Man kann den Ruf auch mit dem kommenden Codierwechselstrom codieren. Der gehende Codierwechselstrom wird über S1,V, Ltg, ÜV gesendet und der kommende über ÜV, Ltg, VL , ÜE, E2.

Die Methode dieser Duplexübertragung kann nicht nur als vorteilhafter Ersatz für die Echokompensation beim Teilnehmeranschluss , sondern auch in Fernverkehr, z.B. bei Richtfunkverbindungen vorgesehen werden. In der Fig. 33 ist hierfür eine Prinzipbeispiel dargestellt. Bei diesem sind nur die Bausteine eingezeichnet, die zum Verständnis erforderlich sind.Der Sendewechselstrom wird hierbei zugleich als Codierwechselstrom vorgesehen. Vorteilhaft wird eine Vorstufenmodulation verwendet. Im Osz1 wird die Sendefrequenz erzeugt. Im Analog/Digitalwandler wird das Basissignal BS in einen Wechselstromdigitalcode entsprechend der Fig. 15a umgewandelt, da.h.dem im 0sz erzeugten Sendewechselstrom werden kleine oder grosse Amplituden aufgeprägt. In der Fig. 24 ist eine derartige Methode dargestellt. Über Verstärker geht es dann zur Endstufe 1E und dann zur Antenne. Die Oberwellen und Geräusche können dabei in der Weise kompensiert werden, indem ein Zweigstromkreis gebildet wird, in dem ein Sperrfilter für die Nutzsignalfrequenz angeordnet wird und zusätzlich ein Phasenschieber für 180 Grad. Dieser Zweigstromkreis wird an den Endverstärker oder nach dem Endverstärker dem Hauptstromkreis wieder zurgeführt. Auf diese Weise werden dann die Oberwellen und die Geräusche kompensiert. Auf der Empfangsseite werden die Nutzsignale über einen festen Abstimmkreis einem Verstärker V zugeführt und von dort einmal einem Digital/Analogwandler D2/A2. Das Analogsignal wird dann über eine Vermittlung weiter geleitet. Vom Verstärker aus erfolgt noch eine Abzweigung in der ein Phasenschieber von 90 Grad und ein Begrenzer angeordnet ist zum Oszillator Osz2 der Gegenrichtung. Bei den kleinen Richtfunkabständen ist die Laufzeit vernachlässigbar, sodass der Sendewechselstrom von S2 gegenüber S1 um 90 Grad phasenverschoben ist. Der Sendewechselstrom Osz2 wird im Analog-Digitalwandler A3/D3 amplitudencodiert und über Verstärkerstufen dem Endverstärker zugeführt und von diesem zur Antenne. Auf der Empfangsseite E1 wird über einen Abstimmkreis und Verstärker V der Codierwechselstrom auf dieselbe Weise wie beim Empfänger E2 weiter verarbeitet,jedoch ohne Abzweigung zum Oszillator Osz1. Eine verschiedene Polarisiation für die beiden Senderichtungen ist nicht erforderlich. Die Fresnel-Zone muss beachtet werden. U.U. kann man je Polarisationsebene einen Duplexbetrieb durchführen.

In der Fig.34 ist ein Prinzip für den Phasenschieber der Fig. 33nach der Methode der Fig.7 dargestellt. Im Abstimmkreis/Verstärker V im Empfänger E2 der Fig.33 wird der empfangene Wechselstrom abgezweigt und einem Begrenzer B - es kann auch ein Schmitt_Trigger sein - zugeführt. In diesem werden aus den Halbwellen positive Jp und negative Jn-Impulse gewonnen. Beide Impulsarten werden einem Steuerglied St zugeführt. An dieses Steuerglied sind noch die Steuerimpulse Js und ein Beginnkriterium Be für den Beginn angeschlossen. Der Zweck des Steuergliedes ist, dass in Abhängigkeit vom Beginnzeichen immer ein ganzer Jp-Impuls im Zählglied wirksam wird. Während des Jp-Impulses gelangen die Steuerimpulse zum Zählglied, mit denen dann die Steuerung desselben erfolgt. Im Beispiel gelangen während eines Jp-Impulses 1000 Steuerimpulse Js auf das Zählglied. Im Beispiel sind noch Toleranzen für evtl. vorkommende kleine Frequenzschwankungen vorgesehen. Deshalb sind am Zählglied jeweils 3 Ausgänge 999,1000,1001 und 499,500 und 501 vorhanden. 1000 Ausgänge entsprechen einer Halbperiode, also 180 Grad, dann entsprechen 500 Ausgänge einem Winkel von 90 Grad. Da in der Schaltung der Fig.33 eine Phasenverschiebung von 90 Grad erforderlich ist, ist eine solche immer beim Ausgang 500 gegenüber dem im Empfänger E2 vorhanden, d.h. nach dem Jp-Impuls wird beim Abgriff 500 die Halbwelle mit der Phasenverschiebung 90 Grad wirksam und zwar entsprechend der Schaltung der Fig. 12 . Bei jedem der Ausgänge des Zählgliedes Z 999,1000,1001 wird am Ausgang des Gatters G11 eine Potentialumkehr bewirkt. Je nach Länge des Jp-Impulses ist einer dieser 3 Ausgänge markiert. Auch beim Gatter G12 erfolgt am Ausgang eine Potentialumkehr wenn der Jn-Impuls auftritt und das monostabile Glied mG4 , das eine Verzögerung aufweist und durch einen Jp-Impuls gebracht wurde, noch wirksam ist. G11 und G12 machen G13 wirksam, das wieder G16 zur Wirkung kommen lässt. Über G16 werden die Gatter G8,G9 und G10 wirksam, die nun in Abhängigkeit vom markierten Ausgang eines der monostabilen Glieder mG1,mG2 oder mG3 in die Arbeitslage bringen. In Zusammenwirken mit den Ausgängen 499,500 und 501 wird dann beim Erreichen dieser Ausgänge eine 90 Grad Phasenverschiebung über das elektronische Relais ER codiert. Die Verzögerung von mG1 bis mG3 muss also grösser als 500 Steuerimpulse sein. G 16 steuert zugleichG17, das die Rückschaltung des Zählgliedes bewirkt.

Die Fig. 18 stellt auch eine quaternäre Kodierung dar. Mit der negativen Halbwelle der Periode kann man nochmals dieselbe Kodierung vornehmen, sodass man mit der Periode 2 hoch 4 Möglichkeiten hat. wird noch ein Wechselstrom auf dieselbe Art moduliert und um 90 Grad phasenverschoben,und addiert und als ein Codierwechselstrom übertragen , so kann man mit einer Periode 2 hoch 8 Kombinationen herstellen. Das dabei anfallende Frequenzband ist sehr schmal. Man kann auch zusätzlich eine Phasencodierung vornehmen, sodass man weitere Kombinationen erhält. In der Fig.37 sind 3 Perioden mit verschiedenen Phasenlagen dargestellt. JederPhasensprung bedeutet auch eine Frequenzänderung, wie bereits bei der Erläuterung der Fig.7 dargelegt. Die Periode mit der Frequenz f ist die normale Phase. f1 ist um ca. 36 Grad voreilend und hat daher eine Frequenz von 1.1MHz. f2 ist um ca. 36 Grad nacheilend mit der Frequenz von 0,9 MHz. Wie aus der Fig.18 hervorgeht, ist der Summenwechselstrom I(K1,K2) von den Vektorenwechselströmen k1(u) und K2(v) 45 Grad vor- und nacheilend entfernt. Wie aus der Fig. 14 hervorgeht, haben die Vektorwechselströme die Amplitudenwerte UA und VA , wenn einer den Wert Null aufweist. Dies wird bei der Auswertung in der Empfangsstelle ausgenützt. Schaltungen hierfür gibt es bei der herkömlichen QAM. Bei der Erfindung ist in der Fig. 13 ein anderes Beispiel dargestellt. Der ankommende Summenwechselstrom wird, wie in der Fig.8 gezeigt, einem Begrenzer zugeführt, sodass dadurch hs und ls Impulse entstehen. Aus diesen Impulsen kann man die Periodendauer ermitteln, und auch die Phasenlage. Da bekannt ist, dass die Vektorwechselströme um 45 Grad vor- und nacheilend vom Summenwechselstrom entfernt sind, kann man in diesen Stellungen Probeentnahmen entnehmen. Die Ausgänge u und v stellen eine Phasenverschiebung von 45 Grad dar. In diesen Ausgängen sind z.B. elektronische Relais ER1 und ER2, die dann die Probeentnahme vornehmen. In der Fig.37, Periode f sind solche Probeentnahmen eingezeichnet. (K1(u), K2(v)).

Wie in der Fig.23 dargestellt, gibt es im Beispiel der Fig.18 4 Kombinationsmöglichkeiten. Man kann nun eine Auswertung auch in der Weise vornehmen, indem man die 4 Kombinationswechselströme in 4 Stromkreisen, d.h. deren Vektorwechselströme um 180 Grad phasenverschoben je Kombination zusammenschaltet. In der Fig.35 ist die Kombination 1/1 (Fig.23) dargestellt. Der Summenwechselstrom I(K1,K2) setzt sich zusammen aus den beiden Vektorwechselströmen k1(u) und k2(v). Bei der Auswertung dieser Kombination werden die beiden Vektorwechselströme um 180 Grad phasenverschoben mit dem Summenwechselstrom I(K1,K2) zusammengeschaltet. Die um 180 Grad phasenverschobenen Vektorwechselströmesind in der Fig.35b dargestellt. In der Fig. 36 ist ein Beispiel dargestellt, bei dem der Vektorwechselstrom K1(u) die grösste Amplitude aufweist , während der Vektorwechselstrom K2(v) nur die Hälfte der Amplitude von K1(u) aufweist. In der Fig.36b sind nun die beiden Vektorwechselströme um 180 Grad phasenverschoben. Enthält der Summenwechselstrom von Fig. 36a diese Kombination, so werden sich die Wechselströme aufheben. In der Fig.41 ist eine Übersicht einer solchen Auswertung, und zwar für die Kombinationen der Fig.23, 0+0,1/1,1/0, 0,1. An den Addierer Ad der Kombination 0/0 wird einmal der Summenwechselstrom vom Übertragungsweg und einmal der Wechselstrom uo/vO (Fig.18), auch in der Fig.24 eingezeichnet. An uo/vO wird also immer der Wechselstrom derselben Amplitude angeschaltet. Anden Punkt 1/1 würde ausser dem Summenwechselstrom der Kompensationswechselstrom I dauernd angeschaltet, am Punkt 1/0 der Wechselstrom (II) der Fig.24 und am Punkt 0/1 der Wechselstrom(III) der Fig.24. Stimmt die Kombination mit dem jeweiligen Summen- und Vektorenwechselstrom überein, so heben sich dieselben auf, da für diesen Zweck die Wechselströme der Fig.24 noch um 180 Grad phasenverschoben werden. Nach jeder Periode werden über die Schalter es1,..die Punkte an den jeweiligen Kondensator C geschaltet und zwar kurzzeitig. Nach dieser Anschaltung wird über es2 der Konsensator an die Auswerteeinrichtung AW geschaltet. In dieser muss nur festgestellt werden, ob Potential oder kein Potential vorhanden ist. Liegt an C kein Potential, so ist die Kombination 0/0 ausgewertet. Nach diesem Vorgang wird der Kondensator C über eine andere Stellung des elektronischen Schalters es vollkommen entladen. Da sich bei der Fig.37 bei verschiedenen Halbperiodendauern, die vorher bei der Auswertung nicht bekannt sind, kann man alle vorkommenden Probeentnahmen vormehmen und nach der Messung der Halbperiodendauer nur die verwerten, die für die jeweilgige Halbperiodendauer vorgesehen sind.

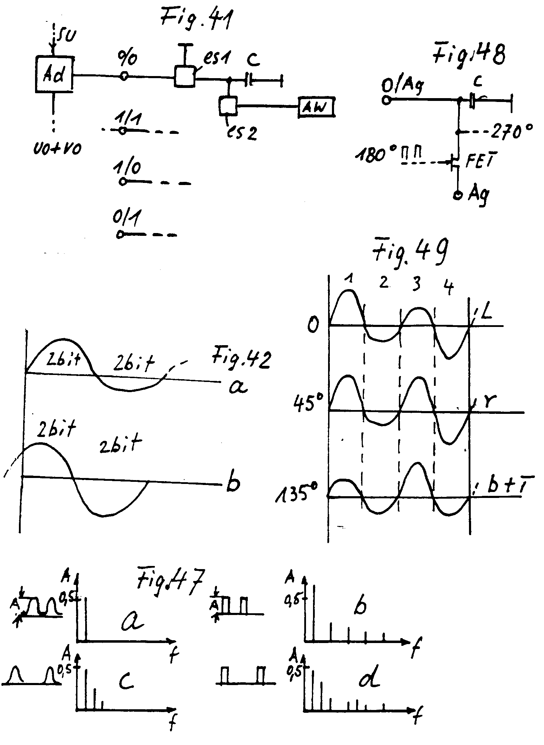

In der Fig. 39 werden 4 Sprachkanäle bipolar zeitmultiplex abgegriffen und zu einem Codierwechselstrom entsprechend dem Prinzip der Fig.16 vereinigt.Der Codierwechselstrom beträgt dann 4x8 KHz = 32 KHz. Über den Addierer Ad wird ein weiterer Codierwechselstrom von 32 KHz, jedoch um 90 Grad phasenverschoben hinzugefügt. Dasselbe erfolgt nochmals mit weiteren 2 Codierwechselströmen , die die Phase wie in Fig.15d,e von 90 und 180 Grad aufweisen.Beide Summencodierwechselströme können nun wieder addiert werden und mit einem einzigen Codierwechselstrom derselben Frequenz übertragen werden, analog der Fig.17. Ein unipolarer Abgriff der Känäle entsprechend der Fig.16a ist günstiger, weil dann der kleinste zu übertragende Wert über den Störpegel gelegt werden kann. In Fig.40 ist eine bekannte Schaltung zur Erzeugung von unipolarer PAM dargestellt An S wird das Signal und an P die Abgriffspulse gelegt. Am Ausgang PAM können dann die unipolaren Probeentnahmen abgegriffen werden.Fig.39 ist eine weitere Schaltung der Anwendung der Erfindung.

In der Fig.18 sind punktiert noch die Vektoren eingezeichnet, deren Grösse bei der Auswertung in manchen Fällen berücksichtigt werden müssen. Erfolgt eine Auswertung nach dem Prinzip der Fig.35, 41 und 36, und wurde nach dem Prinzip der Fig.24 gesendet, muss natürlich eine Anordnung nach der fig.24 auch auf der Empfangsseite vorgesehen werden.

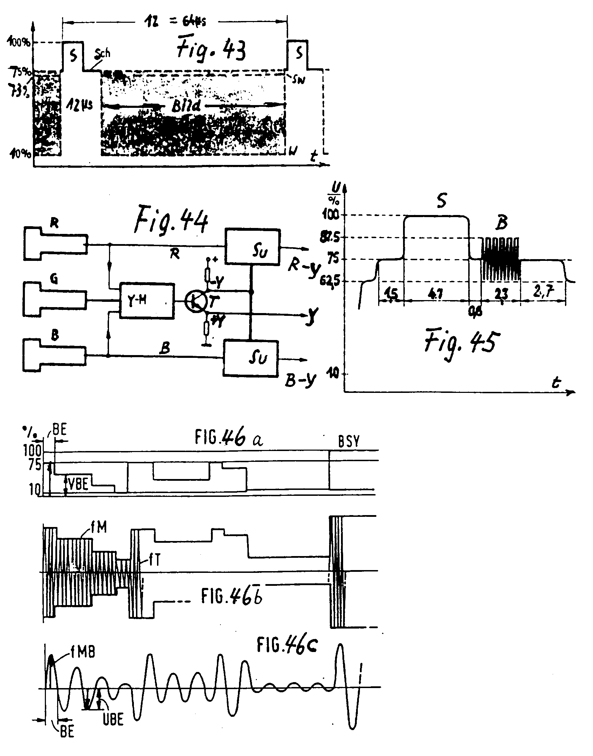

Ausser der Datenübertragung lässt sich die Erfindung auch vorteilhaft bei der analogen und digitalen Sprachübertragung und bei der Übertragung der Fernsehsignale , also der LuminanzChrominanz- Ton- und Steuersignale, einsetzen. Werden die Kennzustände, wie in der Fig.18 dargestellt, nur bei 45 Grad angeordnet, so kann man , wie aus der Fig.24 hervorgeht, auf der Sendeseite einfach codieren. In einer Halbwelle kann man dann 2 bit und in der negativen Halbwelle ebenfalls 2 bit, wie in der Fig.42a gezeigt. Wird dasselbe mit einem 2. Codierwechselstrom gemacht, der jedoch um 90 Grad phasenverschoben sein muss, und werden diese beiden Codierwechselströme addiert, so kann man mit einer Periode des Summenwechselstromes 8 bit unterbringen. Mit 8 KHz lässt also dann die Sprache pulscodemoduliert übertragen. Wird beim Fernsehsignal das Luminanzsignal jeder Abtastprobe ebenfalls mit 8 bit codiert, so genügt ebenfalls je Probe bezw. Abgriff eine Periode eines Summenwechselstromes , d.h. man kann mit derselben Frequenz wie die Analogsignale die PCM-Signale übertragen. Bei der heutigen Übertragung der Bildsignale BE ist keine Synchronisierung mit dem Kameraabgriff vorhanden. Würde man nach Bildpunkten den PAM-Abgriff vornehmen wären bei 833 Bildpunkten je Zeile ca. 13 Millionen Bildpunkte je Sekunde erforderlich. Bei digitaler Übertragung wäre dann eine Frequenz von 13 MHz notwendig.Für diese 833 Bildpunkte sind 52 us, wie auch aus der Fig.43 hervorgeht, erforderlich. Würde man das Austastsignal mit derselben Abgriffsfrequenz codieren, wären je Zeile 1025 Abgriffe erforderlich, d.h.dass ca. 16 MHz für die PCM-Übertragung notwendig wären. Der Träger kann dann so gewählt werden , dass das obere oder untere Seitenband in die vorbestimmte Lage im jeweiligen Kanal fällt. Es hängt natürlich von den Preisen der Analog/Digitalwandler ab, ob man die 16 MHz als Codierwechselstrom beibehält, oder ob man eine Aufteilung in 2x8, 4x4, oder 8x2 MHz vornimmt, und ob man die PAM-Signale zeitmultiplex abgreift und dann in PCM-Signale überführt oder ob man die PCM-Signale zeitmultiplex in 2,4, oder 8 Kanälen verteilt. Dies ist lediglich eine Frage der Wirtschaftlichkeit. Damit sich die Codierwechselströme gleicher Frequenz nicht gegenseitzig stören, kann man sie einem Träger aufmodulieren und jeweils den Träger und eine Seitenfrequenz herausfiltern Bei 4x4 MHz kann man z,H. die Träger 16,17,18 und 19 MHz vorsehen. 2 Beispiele für die Verkleinerung von digitalen und analogen Signalen, bei denen die Halbwellen als Codelemente verwendet werden, sind aus den Fig. 15 und 16 ersichtlich. Zusätzlich könnte man dann noch die Farb-Ton-und Steuersignale, soweit sie nicht in der Austastlücke untergebracht werden können, mit einem oder 2 4 MHz Kanälen codieren und einem Träger mit 20 und 21 MHz unterbringen. Dass eine Codierung mit den Amplituden der Halbwellen eines sinusförmigen Wechselstromes schmalbandig wird geht aus der Fig.47 hervor. In dieser sind die Amplitudenspektren bei cos- und rechteckigen Pulsen bei verschiedenen Tastverhältnissen dargestellt. Aus der Fig.47a ist ersichtlich, wenn die cos-Pulse in einer ununterbrochenen Folge gesendet werden, dass dann keine Oberwellen entstehen. In Fig.47b werden Rechteckimpulse mit gleicher Periodendauer vorgesehen, hier entstehen Oberwellen. Dasselbe gilt auch für die Fig. 47c und 47d. Nur wenn eine ununterbrochene Folge von cos-förmigen Pulsen gesendet werden, entstehen keine Oberwellen. Will man bei der Übertragung über Leitungen Gleichstromfrei heit haben, so muss man als Codeelement die Periode vorsehen.

Nachstehend werden nun einige Beispiele für die Anwendung der Erfindung und zwar zuerst mit analoger Codierung, erläutert. Die beiden getrennten Stereokanäle der Fig.38, die ggf. schon zeitmultiplex entsprechend der Fig.39 zusammengefasst sein können, werden pulsamplitudenmoduliert - eine bekannte Schaltung ist in Fig.40 dargestellt- und zwar werden die Pulse dines Stereokanals umgepolt.Die Pulse werden in der Folge zu Treppensignalen , z.B. mittels Kondensatorspeicherung mit bestimmter Zeitkonstante und dann mit einem vereinfachten Tiefpassfilter mit geringer Flankensteilheit zugeführt. Esentsteht dann ein sinusförmiger Wechselstrom. Im Beispiel sind dann die Abgriffe des B-Stereosignals die positiven Halbwellen und die des A-Signals die negativen Halbwellen. Um möglichst viel über einen Kanal übertragen zu können, wird das Prinzip der Fig.15 angewendet. Die Abgriffsfrequenz der Fig.38 hat die Phasenlage 0 entsprechend der Fig.15b. Weitere Anordnungen nach der Fig.38 werden mit einer Abgriffsfrequenz gleicher Frequenz, jedoch um 90 Grad phasanverschoben und 2 weitere Anordnungen mit einer Phasenlage von 90 Grad und 180 Grad, wie in der Fig.15 eingezeichnet. Zwei um 90 Grad phasenverschobene Codierwechselströme werden dann addiert. Die beiden Summenwechselströme haben dann eine Phasenlage von 45 Grad und 135 Grad, diese sind also ebenfalls wieder gegeneinander um 90 Grad phasenverschoben. Diese beiden Summenwechselströme können dann nochmal addiert werden, sodass man mit einem Codierwechselstrom strom 4 mal eine Anordnung nach der Fig.38 übertragen kann. Manchmal kann die Frequenz des Codierwechselstromes, z.B. die bei der Fig.38 notwendigen, zu hoch sein. Dann kann man entsprechend der Fig.15 verfahren. Die Abtastfrequenz der Fig.38 sei 40 KHz, dann kann man z.B. die Information in 4 Codierwechselströme mit je 10 KHz aufteilen. Die Probeentnahmenabgriffe müssen dann bei 0,90,180 und 270 Grad zu erfolgen. Die Abgriffsfrequenzen haben also gegeneinander solche Phasenverschiebungen, dass sie nicht zweimal summiert werden können. Zu diesem Zweck muss eine Zwischenspeicherung erfolgen. Man benötigt folgende Phasenverschiebungen 90,180,180 und 270 Grad. Die Probe entnahmen von 0 Grad müssen dann um 90 Grad, die von 90 Grad ebenfalls um 90 Grad auf 180 Grad phasenverschoben werden. Man kann auch die 0 Grad Phasenverschiebungen um 180 Grad phasenverschieben. Vorhanden sind dann 90,180 und 270 Grad, phasenverschoben wird 0 Grad nach 180 Grad. In der Fig.48 ist ein Prinzip dargestellt Die Probeentnahmenabgriffe mit 0 Grad werden über 0/Ag einem Kondensator zugeführt und gespeichert. Mit 180 Grad Abgriffspulsen wird auch der Feldeffekt transistor gesteuert, der die Ladung am Kondensator C der letzten Probeentnahme 0 kurzzeitig über Ag weitergeibt. Ein weiterer Schalter, nicht eingezeichnet, bringt den Kondensator mit den 270 Grad Abgriffpulsen auf Nullpotential. Nun kann man immer 2 um 90 Grad phasenverschobene Codierwechselströme addieren und dann die beiden Additionswechselströme , die gegen einnander ebenfalls um 90 Grad phasenverschoben sind wieder addieren. Wie bereits bei der Erläuterung der Fig.16a angeführt wird man den grössten Amplitudenwert so legen, - in Fig.16a P6 - dass die dazugehörige Halbwelle über dem Störpegel liegt, z.B. in Fig.38 P10, P 14, P0.

In Fig.46 wird das Bildsignal Y pulsamplitudenmoduliert. Die Fig.44 zeigt wie dieses und die Chrominanzsignale gewonnen werden. Die Kamera liefert die rot-grün-und Blauwerte. Über die Y-Matrix Y-M und über den Transistor T wird das Y-Signal und die -Y-Werte gewonnen. Die Farbdifferenzsignale R-Y und B-Y erhält man in den Stufen Su, in die einmal die Signale R bezw. B und -Y zugeführt wwerden. In der Fig.46a sind die Bild- und Austastsignale (BSY) dargestellt. Fig.46b zeigt die herkömliche Übertragungsart mit Hilfe eines Trägers, die Nachteile einer solchen Übertragung und Auswertung sind bekannt.- In der Fig.45 sind die Signale der Austastzeit genauer dargestellt. Vor allen Dingen ist beim NTSC und PAL-System der Burst wichtig, da die Farbtonsignale durch die Phase codierte werden und der Burst die Bezugsphase liefert. Ein Burst ist bei den Codierungen der vorliegenden Erfindung nicht erforderlich. Wie bereits beschrieben,wären, würde man die Abtastfrequenz der Kamera zugleich als Abtastfrequenz für die PAM-Signale vorsehen bei Halbwellencodierung 8 MHz und bei Periodencodierung 16 MHz erforderlich, die Austastzeit inbegriffen. Die vom Taktgeber für die Kamera erzeugten Signale könnten dann zugleich min als Abtastsignale bei der PAM verwendet werden. - 6MHz oder 5 MHz wären sicher auch schn als Abtastfrequenz ausreichend - In der Fig.46c ist eine Halbwellencodierung vorgesehen.Man kann dabei ähnlich wie in der Fig.38 beschrieben, vorgehen. Auch die Austastsignale werden im Beispiel ebenfalls durch die Grösse der Amplituden der Halbwellen codiert. In diesen Bereich kann man zusätzlich Steuersignale unterbringen. Die Farb-Ton- und Steuersignale werden digital codiert. Bei den Farbwerten wird nicht der Summenvektor im Farbkreis durch die Vektoren u und v markiert, sondern jeder Farbcharakteristik wert für sich, also z.B. der Farbauszug, das Farbdifferenzsignal, die Farbsättigung.Ob diese Werte zu rot , blau und ggf. zu grün gehören ergibt sich aus der Lage des Codes, im Beispiel der Fig.49 ist die Phasenlage des Codes, rot 45 Grad und blau 135 Grad Phasenverschiebung gegenüber dem Codierwechselstromes des Luminanzsignales L = 0 Grad. - Wenn es zweckmässig ist, kann man rot+blau auch seriell anordnung und codieren, sodass durch die serielle Lage die Farbe selbst codiert wäre. - Die Codierung der Farbwerte erfolgt durch die Amplituden der Halbwellen eines Wechselstromes, bei binärer Codierung wäredn die Kennzustände grosser und kleiner Amplitudenwert. Im vorliegenden Beispiel soll eine Codierung nach dem Prinzip der Fig.18 erfolgen, bei dem mit dem Summenwechselstrom 45 Grad eine solche erfolgt. Mit dem Vektor Summenwechselstrom kann man 2,3, 4 oder noch mehrere Werte codieren.Im Beispiel der Fig. 49 werden die Werte I,(II),(III) und IV gewählt. Mit einer Halbwelle kann man also 2 bit, wie aus der Fig.23 hervorgeht, codieren. Im Beispiel werden für 4 Probeentnahmen Luminanzsignal 1 Probeentnahme von rot und blau bereitgestellt. In die Zeit der 4 L-Probeentnahmen können 8 bit für rot mit dem Codierwechselstrom von 45 Grad und 6 bit für blau und 2 bit für Ton- und Steuersignale mit dem 135 Grad Codierwechselstrom unterge bracht werden. Da die Auswertung des Codes von rot und blau erst nach den 4 Halbwellen erfolgen kann, der Farbwert jedoch den 4 Probeentnahmen von L zugehörig ist, müssen die 4 L-Probeentnahmen solange gespeichert werden, an zweckmässigsten ist dies beim sender vorzunehmen. Die beiden Wechselströme 45 Grad und 135 Grad sind voneinander um 90 Grad phasenverschoben, sodass sie addiert werden können. Der Additionswechselstrom liegt dann bei 90 Grad, Dieser Additionswechselstrom kann dann nochmals mit dem Codierwechselstrom L= 0 Grad addiert werden, sodass alle Signale mit einem Wechselstrom übertragenwerden können. Natürlich kann man die Farbwerte mit einem Wechselstrom anderer Frequenz, falls dies wirtschaftlicher ist, übertragen. Eine Frequenzverkleinerung z.B. des Luminanzsignales L kann man entsprechend der Fig.16, wenn es zweckdienlich ist, vornehmen. Dasselbe gilt für die Farbsignale. Analog-Digitalwandler sind um so preiswerter je kleiner die Frequenz ist.

In der Fig.50 ist eine Übersicht eines Fernsehsenders dargestellt, bei dem alle Signale digital codiert und übertragen werden, Die Fernsehkamera FK liefert die rot-blau und gründ - Signale. In der Y-Matrix wird das Y-Signal erzeugt, das mit einer Abtastfrequenz von 6 MHz zu PAM-Pulsen umgewandelt wird. In der Folge werden diese in einen PCM-Code umgewandelt. Es soll ein 4-stufiger Code entsprechend der Fig.24 vorgesehen werdenIn einer Periode können dann 4 biterzielt werden. Werden 8bit verwendet, so ist es zweckmässig nicht die doppelte Frequenz für den Codierwechselstrom vorzusehen, sondern 2 Codierwechselströme mit je 6 MHz, wobei der eine um 90 Grad phasenverschoben wird, um später eine Addierung machen zu können. In der Fig.51a,b sind diese Codierwechselströme dargestellt. Für die Codierung der Farb-und Tonsignale sind nur 4 MHz erforderlich. Für diese wird derselbe Code verwendet. Da eine Probeentnahme mit 8 bit codiert wird, ist bei den Codierwechselströmen je eine Periode notwendig (siehe auch Fig.42). Für 3 Y-Probeentnahmen sind im Beispiel 1 Probeentnahme für die Farbtöne erforderlich. Da die Codierung digital erfolgt, kann erst am Ende des Codewortes der Wert festgestellt werden. Um das Luminanzsignal synchron mit den Farbsignalen an der Fernsehbildröhre zu erhalten, muss das codierte Y-Signal solange gespeichert werden, bis die Farbtonsignale ausgewertet sind, Für diesen Zweck sind in der Fig.50 Vz1 und Vz2-Speicher für die PCM-Signale Diese PCM-Signale werden dann in Codierwechselströme mit gegenseitiger Phasenverschiebung von 90 Grad, wie aus der Fig.51a,b ersichtlich ist, umgewandelt, und im Addierer summiert. Die Farbsignale rot und blau werden mit einer Frequenz von 2 MHz abgegriffen , also pulsamplitudenmoduliert. Diese PAM-Pulse bezw. Probeentnahmen werden in 8 MHz PCM-Pulse umgeformt und einem Wandler W4 bezw. W3 zugeführt, in dem dann ein Codierwechselstrom mit einer Frequenz von 4 MHz gebildet wird. Jede Halbwelle beinhaltet wieder 2bit . Beim Blausignal wird der TonThinzugefügt. Wie aus der Fig.51d hervorgeht, werden die 2bit der letzten Halbwelle für Ton-und Steuersignale vorgese hen. Die beiden Farbcodierwechselströme sind ebenfalls gegeneinander um 90 Grad phasenverschoben, und werden im Addierer summiert. Beide Summenwechselströme , also Lumins z- und Farb-Ton-Signale werden über einen EntkopplerEdem Sendemodulator MO zugeführt. Der Sendewechselstrom wird im Oszillator Osc erzeugt und geht über nicht eingezeichnete Verstärkerstufen,über den Modulator zur Endstufe und zur Antenne. Man kann auch, wie in der Fig.52 dargestellt, die Codierung der Farbsignale ebenfalls mit 6 MHz vornehmen. Die überschüssigen bits können dann für andere Zwecke vorgesehen werden. Dann besteht die Möglichkeit ohne trägerfrequente Zwischenstufe eine doppelte Summie rung vorzunehmen. Die gegenseitigen Phasenverschiebungen sind 0,90,90,180 Grad. Bei der 1. Addierung haben dann die Summenwechselströme Phasenverschiebungen von 45 und 135 Grad. Diese sind also wieder gegeneinander um 90Grad phasenverschoben, sodass eine nochmalige Summierung möglich ist.

Zur Fig. 50 sei noch erwähnt, dass während der Austastzeit an den PAM die Austastsignale AS geführt werden. Die Tonsignale codiert müssen kontinuierlich beim Empfänger unter Zwischenspeicherung in Töne umgesetzt werden.

Beim Fernsehen kann man alle Signale seriell ordnen und mehrere Kanäle gleichzeitig durch QAM oder Doppel-QAM übertragen.

Bei Fig.18 bezw. 24 wird man die Kennzustände so legen, dass der kleinste wesentlich über dem Störpegel liegt. Zum grössten hin können die Abstände verkleinert werden.

Die Speicherung der Fig.48 geht genau so für digitale Werte.

## Patentansprüche

1. Verfahren zur Erzeugung von Phasenverschiebungen unter Verwendung Code-, Zeit- und elektronischer Schaltmittel (Fig.7, Cod, Z, ER), dadurch gekennzeichnet, dass die in den Codeschaltmitteln vorbestimmte Codekombination aus der Information eines oder mehrerer Kanäle in 2 (QAM) oder mehrere phasenverschobene Impulsfolgen gleicher Frequenz mit vorbestimmter Amplitudengrösse in der Weise umgewandelt wird, indem das Codeschaltmittel beim Zeitschaltmittel, das in ununterbrochener Folge periodisch gesteuert wird, wobei ein Zyklus gleich der Halb- bezw. Periodendauer eines Impulses entspricht, für jede Impulsfolge eine solche Markierung vornimmt (Fig.7,zv,z2,Fig.12,25,50,75,100), dass der Abstand bezw. die Abstände zwischen den Markierungen dem Phasenabstand der Impulsfolgen entspricht, für jede Impulsfolge ist dabei ein elektronisches Schaltmittel vorgesehen, das in Abhängigkeit vom Code- und Zeitschaltmittel (Fig.7,G2,G3) Impulse gleicher Halb-bezw.Periodendauer mit codeabhängigen Amplitudengrössen (Fig.7,A) erzeugt.

2. Verfahren zur Erzeugung von Phasenverschiebungen unter Verwendung Code-, Zeit- und elektronischer Schaltmittel (Fig.7), dadurch gekennzeichnet, dass die in den Codeschaltmitteln vorbestimmte Codekombination aus der Information eines oder mehrerer Kanäle in der Weise in einen oder mehrere Codewechselströme umgewandelt wird, bei dem bezw. denen die Impulscodeelemente durch die Grösse der Halb- bezw. Periodendauern mit vorbestimmter Amplitude dargestellt werden, indem das Codeschaltmittel (Fig.7,Cod) beim Zeitschaltmittel(Fig.7 Z), das in einer ununterbrochenen Folge periodisch gesteuert wird, der Zyklus entspricht dabei einer vorbestimmten Halb- bezw. Periodendauer, entsprechend der im Code vorgegebenen Periodendauern Markierungen vornimmt (Fig.7,g2,g3), jeder Impulsfolge wird dabei ein elektronisches Schaltmittel zugeordnet, das in Abhängigkeit vom Code-und Zeitschaltmittel Impulse mit vorbestimmten Halb- bezw. Periodendauern und Amplituden erzeugt.

3. Verfahren zur Erzeugung von Phasenverschiebungen gemäß Patentansprüche 1 und 2, dadurch gekennzeichnet, dass Code-Zeit- und elektronische Schaltmittel (Fig.7,Cod,Z,ER) dergestalt ausgebildet werden, dass die in den Codeschaltmitteln vorbestimmte Codekombination aus der Information eines oder mehrerer Kanäle in der Weise in ein oder mehrere Codewechselströme umgewandelt werden indem entweder die Codewechselströme gegeneinander eine vorbestimmte Phasenverschiebung erhalten (Fig.12) oder dass den Codeelementen bestehend aus den Halb- bezw. Perioden von Rechteckimpulsen eine vorbestimmte Phasenlage bezw. Verschiebung zugeordnet wird und zwar dergestalt, indem das Codeschaltmittel beim Zeitschaltmittel, das in ununterbrochener Folge periodisch gesteuert wird (Fig.7,Osc), während des Zyklus solche Zeitmarkierungen vornimmt, wobei der Zyklus einer vorbestimmten Periodendauer entspricht, dass jede Impulsfolge bezw. jeder Impuls die vorbestimmte Phasenverschiebung erhält, der Impulsfolge bezw. den Impulsfolgen werden dabei elektronische Schaltmittel zugeordnet (Fig.7,ER, Fig.12, ER1 bis ER4) das, bezw. die in Abhängigkeit von den Code-und Zeitschaltmitteln (Fig.7,G2,G3) Impulse gleicher (Fig.12) oder verschiedener Halb- bezw. Periodendauern mit codeabhängigen Amplitudengrössen erzeugen (Fig.7, (A)++,(A)--).

4. Anwendung der Erfindung gemäss Patentanspruch 1 auf 3 oder 4 Codierwechselströme gleicher Frequenz, dadurch gekennzeichnet, dass eine Codierung und ggf. Übertragung nur mit einem Wechselstrom in der Weise erfolgt, indem sowohl den Codierwechselströmen als auch in der Folge dem Summenwechselstrom bezw. den Summenwechselströmen eine solche Phasenlage zugeordnet wird, dass für die Addition der Codierwechselströme oder in der Folge von Codierwechselstrom und Summenwechselstrom (Fig.49,45°/135°=90° - 0°/90°) oder ggf. der Summenwechselströme (Fig.52, 0°/90°-90°/180° ergibt 45/135° - Fig.15) immer ein Phasenunterschied von 90° für die Addition entsteht.

5. Anwendung der Erfindung gemäss Patentanspruch 1 zur Codierung und Übertragung des Luminanzsignales beim Fernsehen, dadurch gekennzeichnet, dass zur Verringerung der Frequenz und der Bandbreite ein Amplitudencode in der Weise vorgesehen wird, indem dieser in 2 (Fig.50, W1,W2) oder mehrere Codierwechselströme gleicher Frequenz (Fig.15) dergestalt aufgeteilt wird dass die Codier- und ggf. in der Folge auch die Summenwechselströme gegeneinander eine Phasenverschiebung von 90° erhalten, sodass durch Addition eine Übertragung nur mit einem Wechselstrom kleinerer Frequenz erfolgen kann.

6. Anwendung der Erfindung gemäss Patentanspruch 1 für Duplexverkehr,dadurch gekennzeichnet, dass die Information von 2 miteinander den Nachrichtenaustausch vornehmenden Stellen (Fig.25,33) jeweils in einen oder mehrere gleichfrequente Codierwechselströme mit Amplitudencodierung umgewandelt wird (Fig.38 eine Richtung z.B.) wobei den Codier-oder Summenwechselströmen der beiden Richtungen eine Phasenverschiebung von 90° zugeordnet wird der Codier- bezw. Summenwechselstrom der einen Richtung wird dabei zur Synchronisierung des Codier- bezw. Summenwechselstromes der anderen Richtung vorgesehen (Fig.25, 90°), an beiden Stellen sind dabei Mittel vorgesehen, die die Codier- bezw. Summenwechselströme der verschiedenen Richtungen trennen (Fig.25,G).

7. Verfahren nach den Ansprüchen 1,4 bis 6 dadurch gekennzeichnet, dass beim Farbfernsehen die Codierung des Luminanz-Farbart,Ton- und sonstiger Signale analog (PAM) oder digital mit den Halb- bezw. Perioden mehrerer gleichfrequenter Wechselströme unter Berücksichtigung ihrer Wertigketi erfolgt (Fig.49) und dass für die Übertragung eine Addition derselben vorgenommen wird, indem die Codier-oder Summenwechselströme gegeneinander um 90° phasenverschoben werden (Fig.49, 45°+135°= 90° - 0°+90°).

8. Verfahren nach den Ansprüchen 1 bis 7, dadurch gekennzeichnet, dass zusätzliche Phasenverschiebungen in der Weise ermöglicht werden, indem die jeweiligen Werte, beispielsweise PAM-Werte, eines Signals gespeichert werden Fig.48,C) , wobei Impulse mit der gewünschten Phasenlage vorgesehen werden (Fig.48, 180°), die Mittel (Fig.48,FET) wirksam werden lassen, die den gespeicherten Signalwert an das gewünschte Glied mit der vorbestimmten Phasenlage weitergeben.

9. Verfahren nach den Ansprüchen 1 bis 7, dadurch gekennzeichnet, dass eine Vervielfachung der Frequenz der Recheckimpulsfolgen in der Weise erfolgt, indem nach dem elektronischen Schaltmittel (Fig.12,ER1) eine Abzweigung vorgesehen wird, in der solche Filter vorgesehen werden, (Fig.12,FiO) dass nur Oberwellen vorbestimmter Frequenz durchgelassen werden.

10. Verfahren nach den Ansprüchen 1 bis 7 und 9, dadurch gekennzeichnet, dass die vom elektronischen Schaltmittel erzeugten Rechteckimpulse in der Folge in einen sinusförmigen Wechselstrom in der Weise umgewandelt wird (Fig.7,J) indem sie vor der Weitergabe über ein entsprechendes Siebmittel gegeben werden.

11. Verfahren nach den Ansprüchen 5 und 7, dadurch gekennzeichnet,dass das Luminanzsignal PAM-moduliert und in eine oder mehrere Folgen von Halboder Perioden mit Amplitudenkennzuständen aufgeteilt wird (Fig.46c).

## Claims

1. Method for producing phase shifts using code, time and electronic switching equipment (fig. 7, Cod, Z, ER) characterized in that in the code switching equipment preset code combinations from the information of one or several channels in 2 (QAM) or more phase shifted pulse sequences of the same frequency with predetermined amplitudes are converted so that the code switching equipment in the time switching equipment, which is continuously controlled in a periodic manner, whereby a cycle equals a period or half period duration of a pulse, this marking being carried out for each pulse sequence (fig. 7, zv, Z2, fig. 12, 25, 50, 75; 100) so that the interval or intervals between the markings correspond to the phase shift of the pulse sequences, whereby an electronic switching equipment is foreseen for each pulse sequence, that generates, in function of the code and time switching equipments (fig. 7, G2, G3) pulses of the same half period or period duration with amplitudes depending on the code (fig. 7A).

2. Method for producing phase shifts using code, time and electronic switching equipment (fig. 7) characterized in that in the code switching equipment a predetermined code combination, received from the information from one or several channels, is converted into one or several alternating code currents in which the elementary pulse code elements are represented by the duration of the period or half period with a predetermined amplitude, in that the code switching equipment (fig. 7 Cod) in the time switching equipment (fig. 7, Z), which is continuously in a periodic manner, the cycle corresponding thereby to a predetermined period or half period duration corresponding to the period duration markings in the code (fig. 7 g2, g3), an electronic switching equipment is allocated to each pulse sequence, which generates pulses in function of the code and timing equipment pulses with predetermined period or half period duration and predetermined amplitudes.

3. Method for producing phase shifts according to claims 1 and 2, characterized in that the code, timing and electronic switching equipments (fig. 7, Cod, Z, ER) are designed in such a way that the code combination predetermined in the coding switching equipment from the information of one or several channels is converted into one or several alternating code currents in which either the code alternating currents receive a predetermined phase shift one compared to the other (fig. 12) or that the code elements consisting of half or whole period duration of rectangular pulses are allocated a predetermined phase or phase shift and in that the code switching equipments in the time switching equipment, which is continuously controlled in a periodic manner (fig. 7 Osc) make such time markings during the cycle, whereby the cycle corresponds to a predetermined period duration, that each pulse sequence or each pulse receives the predetermined phase shift that the pulse sequence or pulse sequences are allocated electronic switching equipment (fig. 7 ER, fig. 12 ER 1 to ER 4) that generate, in function of the coding and timing switching equipments (fig. 7, G2, G3) pulses of the same (fig. 12) or different period or half period duration with amplitudes depending on the code (fig. 7 A⁺⁺, A -).

4. Application of the quadrature amplitude modulation on 3 or 4 alternating code currents of the same frequency, characterized in that the coding and eventually transmission can only be made with an alternating current in such a way that as well the alternating code currents as also sequence of the sum alternating current or currents are allocated such a phase that for the addition of the coding alternating currents or in the sequence or coding alternating current and summing alternating current (fig. 49, 45°/35°-90° - 0°/90° or eventually the summing alternating currents (fig. 52, 0°/90° - 140° give 45/135° - fig. 15) there is always a phase difference of 90° for the addition.

5. Application of the quadrature amplitude modulation for coding and transmission of the luminance signals in television, characterized in that an amplitude code for the reduction of the frequency and the bandwidth is foreseen in a way that it is distributed in two (fig. 50, W1, W2) or more alternating code currents of the same frequency (fig. 15, 16) so that the code currents and possibly also the sum alternating currents have between them a phase shift of 90°C, so that by addition a transmission can only be made with an alternating current of lower frequency.

6. Application of quadrature amplitude modulation for duplex transmission, characterized in that the information from two positions carrying out the information exchange (fig. 25, 33) are converted each time into one or several alternating code currents of the same frequency with amplitude coding (fig. 38 e.g. one direction) whereby the code or summing alternating currents in both directions are allocated a phase shift of 90° so that the code or summing alternating current of one direction is used for synchronizing the code or summing alternating current of the other direction (fig. 25, 90°), means are foreseen in both the positions that separate the code or summing alternating currents of the different directions (fig. 25 G).

7. Method according to any one of the claims 3 to 6, characterized in that the coding of the luminance colour type, sound and other analog signals (PAM) of digital signals in colour television is made with a period or half period of alternating currents of the same frequency taking into account their priority (fig. 49) and that for the transmission an addition of the same signals is carried out in that the coding or summing alternating currents are phase shifted by 90° (fig. 49, 45° + 135° - 90° - 0° + 90°).

8. Methods according to any of the claims from 1 to 7, characterized in that the values concerned, for instance PAM values of a signal are stored (fig. 48, 180°) whereby pulses with the phase wanted are foreseen (fig. 48, 180°), make the means (fig. 48 FET) efficient which transmit the stored signal value to the element wanted with a predetermined phase.

9. Method according to any of the claims from 1 to 7, characterized in that a multiplication of the frequency of the rectangular pulse sequences takes place as follows, that after the electronic switching equipment (fig. 12 ER1) a branching is foreseen in which filters are foreseen (fig. 12, FiO) such that only harmonics over predetermined frequencies are let through.

10. Process according to claims 1 to 7 and 9 characterized in that the rectangular pulses generated by the electronic switching equipment are later converted into a sinusoidal alternating current in such a way (fig. 7, J) that they can be transmitted over a corresponding filtering means.

11. Method according to claims 5 and 7, characterized in that the luminance signal is PAM modulated and divided into one or several sequences of period or half period signals with predetermined amplitudes (fig. 46c).

## Revendications

1. Procédé de génération de variations de la phase de courants alternatifs, utilisant des moyens de commutation par code, durée ou électronique (Fig. 7, Cod, Z, ER), caractérisé par le fait qu'une combinaison de codes préalablement établie dans le moyen de commutation de codes, trouvée dans l'information d'un ou plusieurs canaux en 2 (QAM = 'modulation d'amplitude en quadrature') ou plusieurs séquences d'impulsions déphasées de même fréquence et avec des amplitudes déterminées sont converties en sorte que le moyen de commutation de codes du moyen de commutation en temps, qui est commandé de façon périodique sans interruption, où un cycle est égal à la durée d'une période ou d'une demi-période d'une impulsion, un tel marquage étant réalisé pour chaque séquence d'impulsion (Fig. 7, zv, Z2, Fig. 12, 25, 50, 75, 100) en sorte que l'intervalle ou les intervalles entre les différents marquages correspondent à la variation de phase des séquences d'impulsions, pour cela il est prévu un moyen de commutation électronique pour chaque séquence d'impulsion, qui génère en fonction des moyens de commutation de code et de temps (Fig. 7, G2, G3) des impulsions d'une durée d'une ou d'une demi-période avec des amplitudes dépendant du code (Fig. 7,A).

2. Procédé pour la génération de variations de phase, utilisant des moyens de commutation par code, durée ou électronique (Fig. 7) caractérisé par le fait que dans les moyens de commutation de code une combinaison de code préétablie, reçue de l'information d'un ou plusieurs canaux, est convertie en un ou plusieurs courants de codes alternatifs pour lequel ou lesquels les impulsions élémentaires de code sont représentées par la durée des périodes ou demi-périodes avec une amplitude pré-déterminée, par le fait que les moyens de commutation de code (Fig. 7, Cod) des moyens de commutation de temps (Fig. 7, Z) qui sont commandés de façon périodique en une séquence ininterrompue, le cycle correspondant dans ce cas a une durée d'une période ou d'une demi-période prédéterminée, correspondant à la durée de période préétablie dans les marquages de code (Fig. 7, G2, G3), il est attribué un moyen de commutation électronique à chaque séquence d'impulsions, qui génère des impulsions avec une durée de période ou demi-période et d'amplitudes données en fonction des moyens de commutation de code et de temps.

3. Procédé pour la génération de variations de phase selon les revendications 1 et 2, caractérisé par le fait que les moyens de communication de codes, temps et électroniques (Fig. 7, Cod Z, ER) sont conçu de telle manière que dans les moyens de commutation de codes, la combinaison de codes préétablie de l'information d'un ou plusieurs canaux est convertie en un ou plusieurs courants alternatifs de codes de manière à ce que soit les différents courants alternatifs présentent un déphasage prédéterminé (Fig. 12) soit qu'il soit attribué aux éléments de code consistant en impulsions rectangulaires de durée d'une ou d'une demi-période une phase ou un déphasage préétablie et ce de telle manière que les moyens de commutation de codes du système de commutation en temps, commandé de façon périodique en permanence (Fig. 7, Osc), exécutent ces marquages de temps pendant le cycle où le cycle correspond à une durée de période préétablie en sorte que chaque séquence d'impulsions ou chaque impulsion reçoive le déphasage préétabli, des moyens de commutation électroniques sont attribués aux séquences d'impulsions ou à la séquence impulsions (Fig. 7 ER, Fig. 12 ER 1 à ER 4) qui génèrent des impulsions (Fig. 12) de mêmes ou différentes durées de période ou de demi-périodes avec des amplitudes dépendant du code (Fig. 7, A)++, (A) -).

4. Application de la modulation en quadrature sur 3 ou 4 courants alternatifs de codes de la même fréquence, caractérisée par le fait que le codage et, le cas échéant, la transmission ne se fait que par un courant alternatif de la manière suivante, où tant les courants de codage que le ou les courants alternatifs de somme qui suivent se voient attribuer une situation de phase telle que pour l'addition des courants alternatifs de codage ou les courants alternatifs de codage de somme suivants (Fig. 49, 45°/135°-90° - 0°/90°) ou, le cas échéant, les courants alternatifs de somme (Fig. 52, 0°/90° - 90°/180° donne 45/35° - Fig. 15) il y ait toujours un déphasage de 90° pour l'addition.

5. Application de la modulation en quadrature pour le codage et la transmission de signaux de luminance en télévision, caractérisée par le fait que pour réduire la fréquence et la largeur de bande, un code d'amplitude est prévu de telle manière qu'il soit réparti en deux (Fig. 50 W1, W2) ou plusieurs courants alternatifs de codes de même fréquence (Fig. 15, 16) en sorte que les courants alternatifs de code, ou le cas échéant, les courants de somme suivants soient déphasés de 90°, en sorte que par addition on puisse faire réaliser une transmission qu'avec un courant alternatif de fréquence plus basse.

6. Une application de la modulation d'amplitude en quadrature pour la transmission en duplex, caractérisée par le fait que l'information de deux positions entreprenant l'échange de l'information (Fig. 25, 33) soit chaque fois convertie en un ou plusieurs courants alternatifs de codes de même fréquence avec codage d'amplitude (Fig. 38, une direction par exemple) où les courants alternatifs de codage de somme dans les deux directions sont déphasés de 90°, le courant de codes ou de somme dans une direction est prévu pour la synchronisation du courant de somme ou de codage de l'autre direction (Fig. 25, 90°) et aux deux positions des moyens sont prévus qui séparent les courants de somme ou de codage des différentes directions (Fig. 25 G).

7. Procédé selon l'une quelconque des revendications de 3 à 6 caractérisé par le fait que dans le cas de télévision couleur le codage du type de couleur de luminance, de son et d'autres signaux analogiques (PAM) ou numériques est fait par les périodes ou demi-périodes de plusieurs courants alternatifs de même fréquence en tenant compte de leur priorité (Fig. 49) et que pour la transmission on fasse une addition des mêmes signaux avec un déphasage de 90° des courants alternatifs de codage ou de somme des uns par rapport aux autres (Fig. 49, 45° + 135° - 90° - 0° + 90°).

8. Procédé selon l'une quelconque des revendications 1 à 7 caractérisé par le fait que des déphasages additionnels sont rendus possibles en sorte que les valeurs, par exemple les valeurs PAM d'un signal sont mémorisées (Fig. 45, C), où des impulsions de phase voulue sont prévues (Fig. 48, 180°), et rendent les moyens (Fig. 48, FET) efficaces pour transmettre la valeur mémorisée de signal au membre voulu et avec la phase voulue.

9. Procédé suivant l'une quelconque des revendication de 1 à 7 caractérisé par le fait qu'une multiplication de la fréquence des séquences d'impulsions rectangulaire est faite d'une manière telle qu'après les moyens de commutation électroniques (Fig. 12, ER 1) soit prévu une déviation, dans laquelle des filtres sont prévus, (Fig. 12, FiO) qui ne laissent passer que les harmoniques de fréquence prédéterminée.

10. Procédé suivant l'une quelconque des revendications de 1 à 7 et 9, caractérisé par le fait que les impulsions rectangulaires générées par le moyen de communication électronique sont ensuite converties en un courant alternatif sinusoïdal de telle manière que (Fig. 7, J) qu'avant la transmission ultérieure elles passent par un filtrage correspondant.

11. Procédé selon les revendications 5 et 7, caractérisé par le fait que le signal de luminance est modulé PAM et est distribué en une ou plusieurs séquences de signaux de période ou demi-période avec des caractéristiques d'amplitude données (Fig. 46c).
